# EUROPEAN PATENT APPLICATION

(11) **EP 4 814 031 A1**
(43) Date of publication of application: **30.09.2026**
(21) Application number: 24907947.6
(22) Date of filing: 10.12.2024
(51) Int. Cl.: C08G 61/02, C08J 5/22, B01J 41/13, C25B 13/08, C25B 1/04, H01M 8/1023

(54) **ION CONDUCTIVE POLYMER AND METHOD FOR PREPARING SAME**

(30) Priority: 22.12.2023 KR 20230189725; 06.11.2024 KR 20240156203
(71) Applicant: Hanwha Solutions Corporation, Jung-gu Seoul 04541 (KR)
(72) Inventor: HAN, Junyoung, Daejeon 34128 (KR); LEE, Hyun Seung, Daejeon 34128 (KR); KWON, Kyungho, Daejeon 34128 (KR)
(74) Representative: Berggren Oy
(86) International application number: PCT/KR2024/020168
(87) International publication number: WO 2025/135663

(57) **Abstract**

Provided are an Ion conductive polymer which exhibits excellent ion conductivity and is useful as an ion exchange material such as an anion exchange membrane, an Ion conductive membrane, an electrolyte membrane, a separator, or a water treatment membrane, and a method for preparing the same.

## Description

### [TECHNICAL FIELD]

### Cross-reference to Related Applications

The present application is based on, and claims priority from, Korean Patent Application Nos. 10-2023-0189725 and 10-2024-0156203, filed on December 22, 2023 and November 6, 2024, respectively, the disclosures of which are hereby incorporated by reference herein in their entirety.

The present invention relates to an Ion conductive polymer and a method for preparing the same.

### [BACKGROUND ART]

Ion conductive polymers are widely used as ion exchange materials such as anion exchange membranes, ion conductive membranes, electrolyte membranes, separators, or water treatment membranes in various electrochemical devices such as fuel cells and water electrolysis.

Recently, as the problem of climate change due to global warming becomes serious, interest is concentrated on research on alternative energy to reduce greenhouse gas emissions. Among them, fuel cells are pollution-free systems using chemical reaction energy of hydrogen and oxygen, and have a wide range of application fields such as portable power sources for mobile communication equipment, transport power sources for automobiles, and household and military power generation systems because of high power density and energy conversion efficiency and the possibility of miniaturization.

Water electrolysis technology is a technology for producing hydrogen by electrolyzing water, and is classified into alkaline water electrolysis (AWE), proton exchange membrane water electrolysis (PEMWE), and anion exchange membrane water electrolysis (AEMWE) according to characteristics of an electrolyte and a type of separator.

An anion exchange membrane water electrolysis system includes an anion exchange membrane (AEM) for preventing crossover between ion redox active species of an anode and a cathode, and an ion conductive polymer is mainly used in forming the anion exchange membrane.

In general, an ion conductive polymer used for forming an anion exchange membrane is composed of a polymer backbone and an ion-conducting group. As ion-conducting functional groups, quaternary ammoniums such as benzyl ammonium, alkyl ammonium, imidazolium, piperidinium, and spiro ammonium are used, and as polymer backbones constituting AEMs, poly(aryl ether sulfone) (PES), poly(aryl ether ketone) (PAEK), poly(phenylene oxide) (PPO), polyspirobisindane, polyphenylene (PP), styrene-ethylene-butylene-styrene copolymer (SEBS), and the like are used. In particular, an aryl ether-free polyphenylene polymer backbone has excellent chemical stability and mechanical properties against hydroxide ions (OH⁻), and thus many studies have been recently conducted thereon.

In general, since water acts as a conduction medium for OH⁻ in the ion conduction mechanism of AEM, appropriate water uptake (WU) must be accompanied for high ion conductivity of AEM. In addition, if the AEM has a high hydration number, the ion conductivity of OH⁻ may be decreased.

Polyphenylene-based AEMs have a relatively low water uptake (WU), that is, a low hydration number, compared to a high ion exchange capacity (IEC). Accordingly, polyphenylene-based AEMs have attempted to secure a required level of WU and ion conductivity by introducing more ion-conducting groups. Ion-conducting groups having a positive charge are relatively less stable against OH⁻ than polymer backbones. And, the introduction of excessive ion-conducting groups causes high WU, which leads to a reduction in ion conductivity, meaning it may have a somewhat negative effect on the long-term stability of the AEM.

### [DISCLOSURE OF INVENTION]

### [TECHNICAL PROBLEM]

An object of the present invention is to provide an Ion conductive polymer which exhibits excellent ion conductivity and is useful as an ion exchange material such as an anion exchange membrane, an Ion conductive membrane, an electrolyte membrane, a separator, or a water treatment membrane, and a method for preparing the same.

Another object of the present invention is to provide an ion exchange material prepared from the Ion conductive polymer.

### [TECHNICAL SOLUTION]

Accordingly, according to the present invention, there is provided an Ion conductive polymer comprising a first repeat unit represented by the following Chemical Formula 1, and a second repeat unit represented by the following Chemical Formula 2: 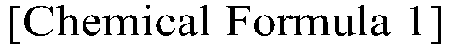 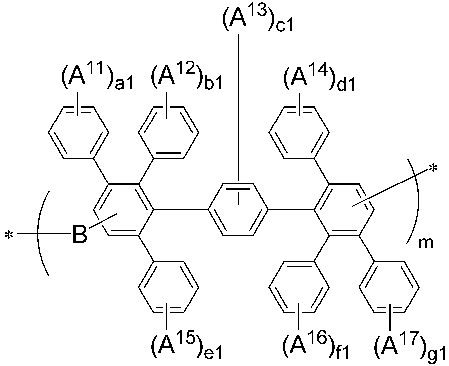 in Chemical Formula 1,
A¹¹ to A¹⁷ are each independently represented by the following Chemical Formula 3,
B is an arylene group having 6 to 18 carbon atoms,
a1 to g1 are each independently an integer of 0 or 1, provided that at least one of a1 to g1 is an integer of 1, and
m is an integer of 1 or more, 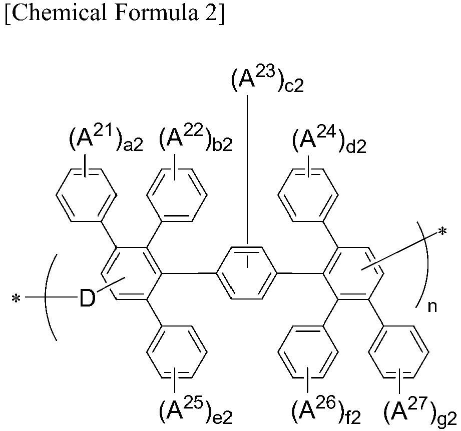
in Chemical Formula 2,
A²¹ to A²⁷ are each independently represented by the following Chemical Formula 3,
D is an alkylene group having 2 to 9 carbon atoms,
a2 to g2 are each independently an integer of 0 or 1, provided that at least one of a2 to g2 is an integer of 1, and
n is an integer of 1 or more,

   [Chemical Formula 3] _{*}-L-Z · Y
in Chemical Formula 3,
L is a branched alkylene group having 3 to 30 carbon atoms,
Z is a quaternary ammonium-based cationic functional group, and
Y is an anion.

Further, according to the present invention, there is provided a method for preparing the Ion conductive polymer described above, the method comprising:
a first step of preparing a compound comprising a structure represented by the following Chemical Formula 8 by Diels-Alder reaction of bistetracyclone with at least one of alkyne compound represented by the following Chemical Formula 6 and at least one of ethynyl substituted aromatic compound represented by the following Chemical Formula 7;
a second step of preparing a compound comprising a repeat unit represented by the following Chemical Formula 10 by reacting the compound comprising the structure represented by Chemical Formula 8 with at least one of compound represented by the following Chemical Formula 9 in the presence of a strong acid; and
a third step of reacting the compound comprising the repeat unit represented by Chemical Formula 10 with a raw material for forming a quaternary ammonium-based cationic functional group:

   [Chemical Formula 6] R^{a}C≡C-B-C≡CR^{b}
in Chemical Formula 6,
B is an arylene group having 6 to 18 carbon atoms, and
R^{a} and R^{b} are each independently hydrogen or an alkyl group having 1 to 30 carbon atoms,

   [Chemical Formula 7] R^{c}C≡C-D-C≡CR^{d}
D is an alkylene group having 2 to 9 carbon atoms, and
R^{c} and R^{d} are each independently hydrogen or an alkyl group having 1 to 30 carbon atoms, 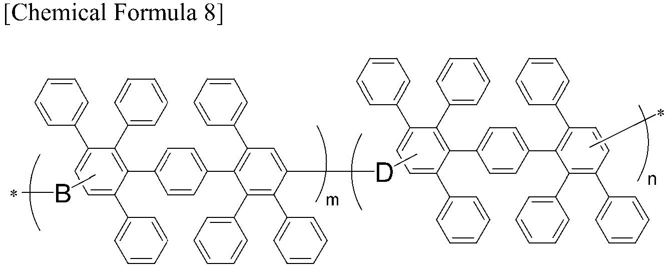
in Chemical Formula 8,
B and D are as defined above, and
m and n are each independently an integer of 1 or more,

   [Chemical Formula 9] HO-L-X
in Chemical Formula 9,
L is a branched alkylene group having 3 to 30 carbon atoms, and
X is a halogen group, 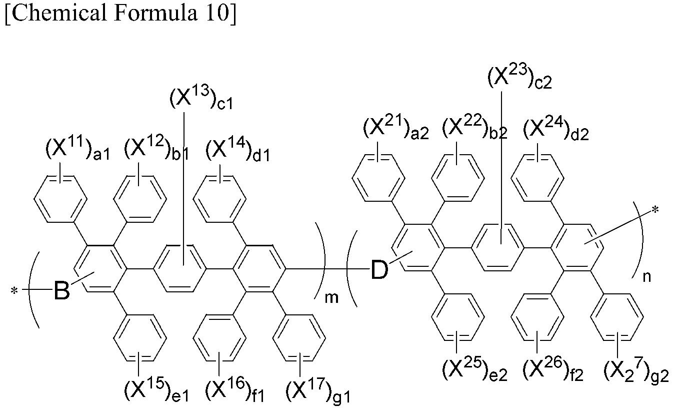
in Chemical Formula 10,
B, D, m, and n are as defined above,
X¹¹ to X¹⁷, and X²¹ to X²⁷ are each independently represented by the following Chemical Formula 11,
a1 to g1 are each independently an integer of 0 or 1, provided that at least one of a1 to g1 is an integer of 1, and
a2 to g2 are each independently an integer of 0 or 1, provided that at least one of a2 to g2 is an integer of 1,

   [Chemical Formula 11] _{*}-L-X
in Chemical Formula 11,
L and X are as defined above.

Further, according to the present invention, there is provided an ion exchange material comprising the Ion conductive polymer.

Further, according to the present invention, there is provided an Ion conductive membrane comprising the Ion conductive polymer.

### [EFFECTS OF THE INVENTION]

The Ion conductive polymer according to the present invention can easily form ion channels for ion transfer, thereby exhibiting excellent ion conductivity. In addition, the Ion conductive polymer can exhibit improved dimensional stability while maintaining excellent solubility. In addition, the Ion conductive polymer has excellent solubility relative to its relatively high molecular weight, and thus can exhibit improved film-forming processability. As a result, it is useful as an ion exchange material, an Ion conductive membrane, and particularly an ionomer material for manufacturing a membrane-electrode assembly (MEA).

### [EMBODIMENTS FOR CARRYING OUT THE INVENTION]

The terminology used herein is for the purpose of describing exemplary embodiments only and is not intended to be limiting of the present invention. The singular forms are intended to include the plural forms as well, unless the context clearly indicates otherwise. In this specification, the terminology "comprise," "include," or "have" is used to describe stated features, numbers, steps, components, or combination thereof, and do not preclude the addition of one or more other features, numbers, steps, components, or combinations thereof.

Since the present invention can be modified in various ways and have various forms, specific embodiments will be illustrated and described in detail below. However, this is not intended to limit the present invention to a specific disclosed form, and it should be understood to include all changes, equivalents, or substitutes included in the spirit and technical scope of the present invention.

In the present invention, "pendant" means a functional group bonded to a side chain rather than an element constituting a main chain backbone, particularly an aromatic ring substituent such as a phenyl group.

Also, in the present invention, the term "substituted or unsubstituted" means being unsubstituted or substituted with one or more substituents selected from the group consisting of deuterium; a halogen group; a nitrile group; a nitro group; a hydroxy group; a carbonyl group; an ester group; an imide group; an amino group; a phosphine oxide group; an alkoxy group; an aryloxy group; an alkylthioxy group; an arylthioxy group; an alkylsulfoxy group; an arylsulfoxy group; a silyl group; a boron group; an alkyl group; a cycloalkyl group; an alkenyl group; an aryl group; an aralkyl group; an aralkenyl group; an alkylaryl group; an alkylamino group; an aralkylamino group; a heteroarylamino group; an arylamino group; an arylphosphine group; or a heterocyclic group comprising one or more of N, O and S atoms, or being unsubstituted or substituted with a substituent to which two or more substituents among the exemplified substituents are connected. For example, "a substituent to which two or more substituents are connected" may be a biphenyl group. That is, a biphenyl group may be an aryl group, or may be interpreted as a substituent to which two phenyl groups are connected.

Also, in the present specification, * in a chemical formula means a bonding position.

Hereinafter, the present invention will be described in detail.

The Ion conductive polymer according to the present invention comprises
a first repeat unit represented by the following Chemical Formula 1, and
a second repeat unit represented by the following Chemical Formula 2: 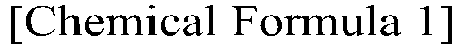 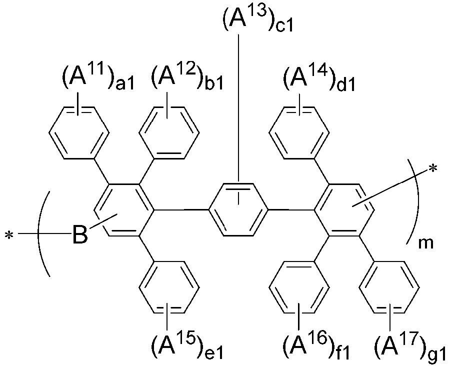
in Chemical Formula 1,
A¹¹ to A¹⁷ are each independently represented by the following Chemical Formula 3,
B is an arylene group having 6 to 18 carbon atoms,
a1 to g1 are each independently an integer of 0 or 1, provided that at least one of a1 to g1 is an integer of 1, and
m is an integer of 1 or more, 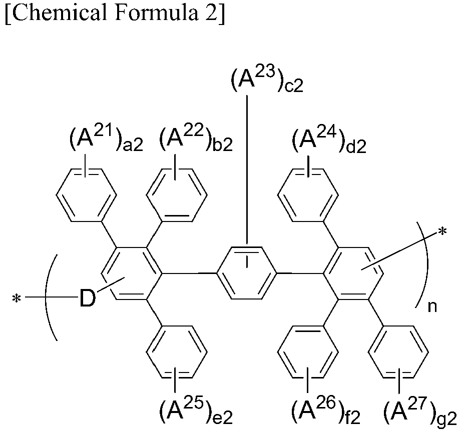
in Chemical Formula 2,
A²¹ to A²⁷ are each independently represented by the following Chemical Formula 3,
D is an alkylene group having 2 to 9 carbon atoms,
a2 to g2 are each independently an integer of 0 or 1, provided that at least one of a2 to g2 is an integer of 1, and
n is an integer of 1 or more,

   [Chemical Formula 3] _{*}-L-Z · Y
in Chemical Formula 3,
L is a branched alkylene group having 3 to 30 carbon atoms,
Z is a quaternary ammonium-based cationic functional group, and
Y is an anion.

Specifically, as in Chemical Formula 1, the Ion conductive polymer according to the present invention comprises an aromatic segment (Aromatic segment) formed through Diels-Alder polymerization, and a structure in which three phenyl rings and an alkylene chain are alternately bonded as in Chemical Formula 2, and further has a structure in which a quaternary ammonium-based cationic functional group is bonded to a pendant phenyl group by a branched linker with respect to these main chain structures. When the central skeleton of the compound further comprises a structure in which a phenyl ring and an alkylene chain are alternately bonded, flexibility is improved, which is advantageous for the diffusion of ions, fuel, water, and the like.

In addition, in the case of conventional Diels-Alder polyphenylene-based Ion conductive polymers, cationic functional groups mainly have a structure bonded to pendant phenyl by a long linear alkylene chain linker. However, the long alkylene chain bonded to the pendant phenyl increases the volume around the backbone and hinders polymer chain packing, resulting in an increase in free volume between chains. Such an increase in free volume is effective for ion transport, but has problems in that it relatively lowers ion selectivity and increases WU (water uptake).

In this regard, in the Ion conductive polymer according to the present invention, a quaternary ammonium-based cationic functional group is bonded to a pendant phenyl group by a branched linker, so that chemical stability of the pendant phenyl group may be improved. Further, it may exhibit appropriate WU and low swelling ratio. Also, even with a high molecular weight, it exhibits excellent solubility in solvents such as NMP, DMSO, etc., and as a result, processability may be improved when applied to an anion exchange material. In addition, since it may have a relatively higher DF (degree of functionalization) than before, durability may be improved along with improvement in IEC and conductivity when an anion exchange material or an Ion conductive membrane is manufactured using the same.

Accordingly, the Ion conductive polymer may be used as various ion exchange materials such as an Ion conductive membrane, an electrolyte membrane, a separator, a water treatment membrane, or an ionomer for a membrane-electrode assembly (MEA).

Specifically, the Ion conductive polymer according to the present invention may be a copolymer comprising at least one of the first repeat unit represented by Chemical Formula 1 and at least one of the second repeat unit represented by Chemical Formula 2. At this time, the Ion conductive polymer may be a random copolymer.

Also, in the first repeat unit represented by Chemical Formula 1, B may be an arylene group having 6 to 12 carbon atoms, and more specifically, may be p-phenylene, m-phenylene, or biphenylene.

Also, a1 to g1 are each independently an integer of 0 or 1, and at least one of a1 to g1 may be an integer of 1.

More specifically, the first repeat unit may be one of the structures represented by the following Chemical Formulae 1a to 11. Among them, it may be a structure represented by Chemical Formula 1a: 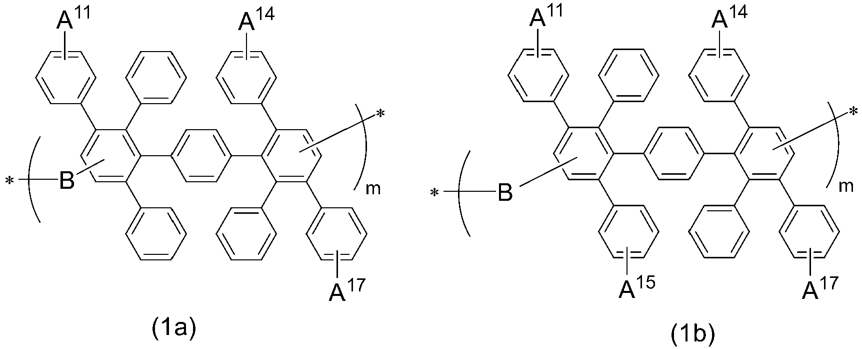 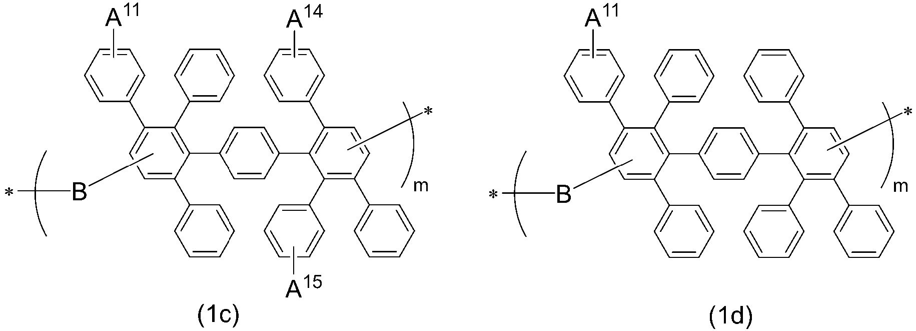 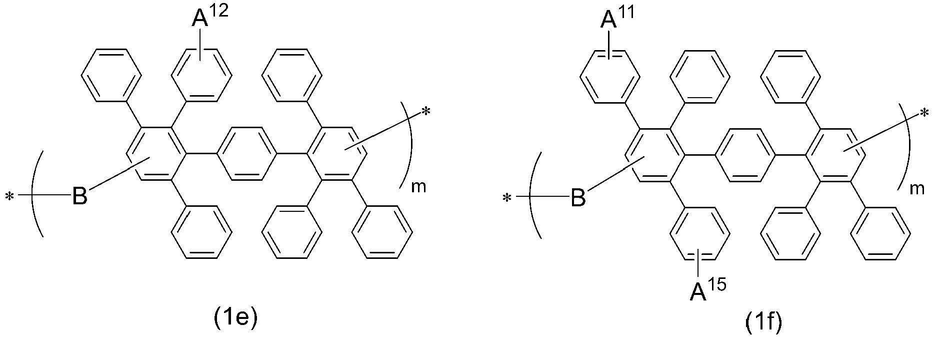 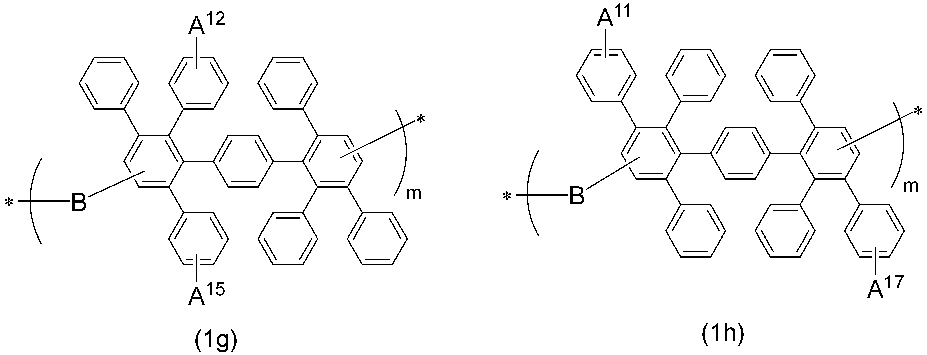 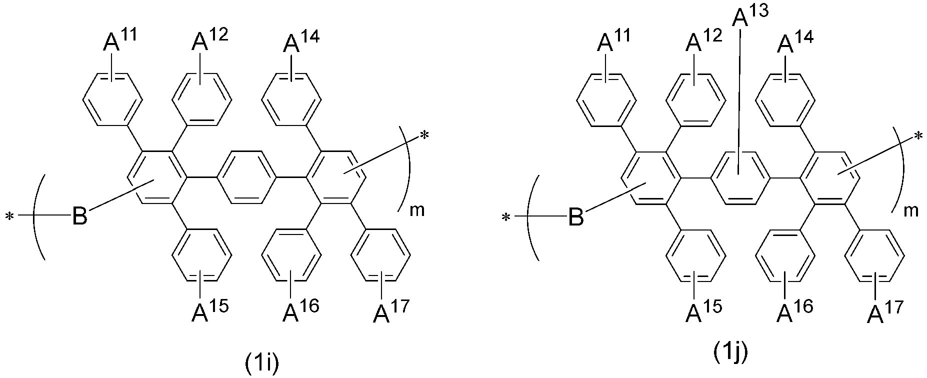 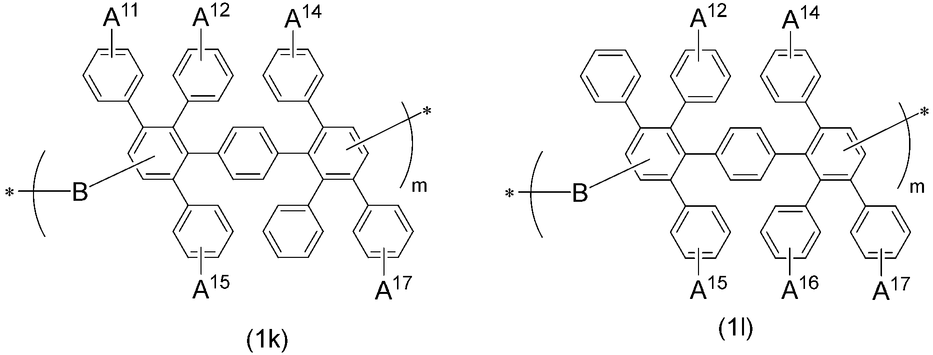 in Chemical Formulae 1a to 11, A¹¹ to A¹⁷, B, and m are as defined above.

Also, in the second repeat unit represented by Chemical Formula 2, D may be an alkylene group having 2 to 6 carbon atoms, or 4 to 6 carbon atoms, and more specifically, may be butylene or hexylene.

Also, a2 to g2 are each independently an integer of 0 or 1, and at least one of a2 to g2 may be an integer of 1.

More specifically, the second repeat unit may be one of the structures represented by the following Chemical Formulas 2a to 21. Among them, it may be a structure represented by Chemical Formula 2a: 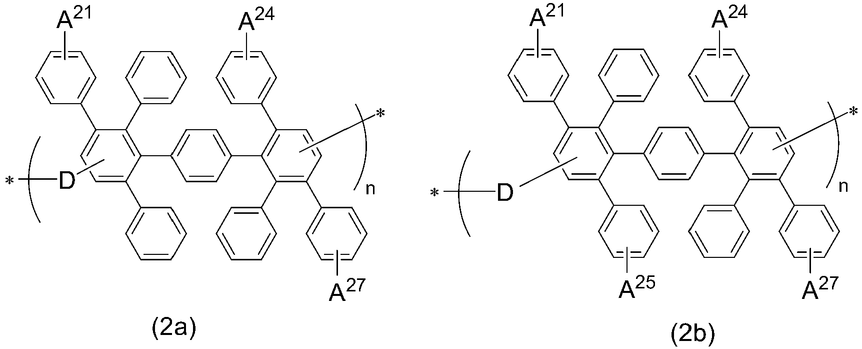 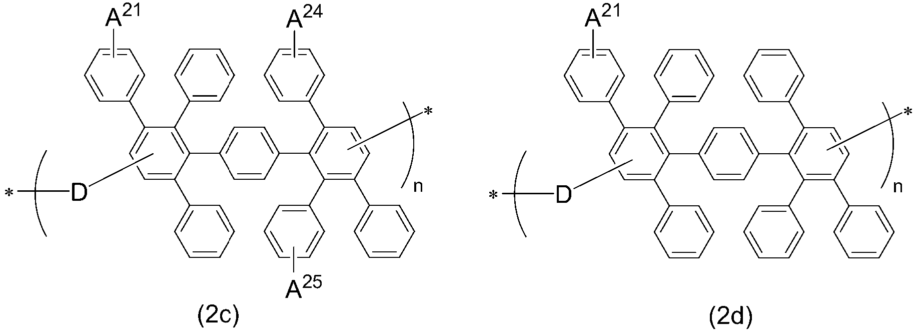 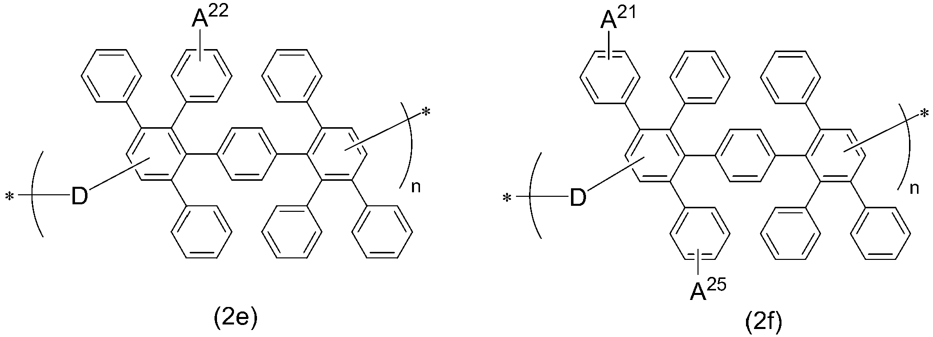 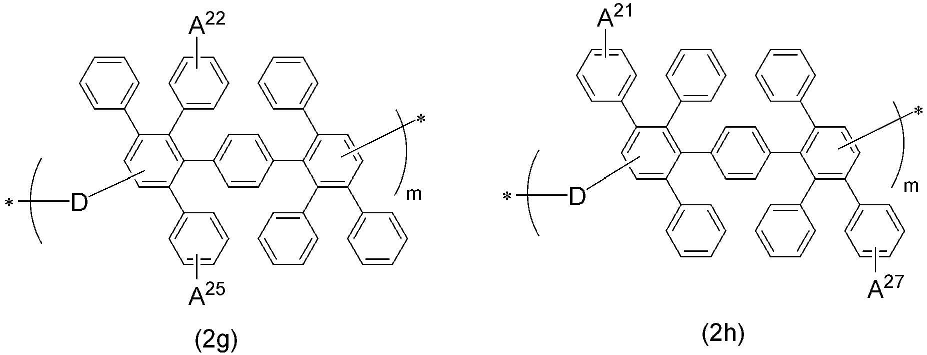 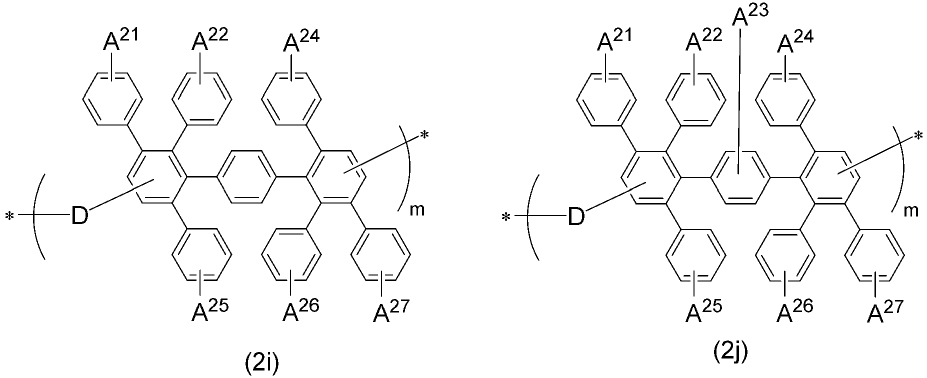 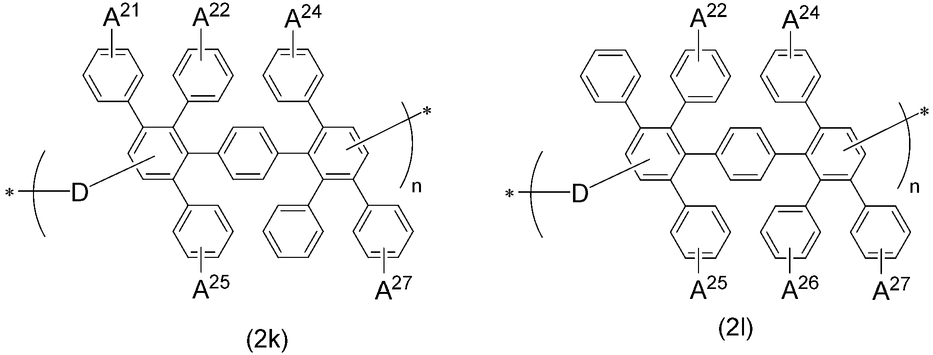 in Chemical Formulas 2a to 21, A²¹ to A²⁷, D, and n are as defined above.

Also, in the first repeat unit and the second repeat unit, A¹¹ to A¹⁷, and A²¹ to A²⁷ are each independently represented by Chemical Formula 3.

In Chemical Formula 3, L is a branched linker to which a quaternary ammonium-based cationic functional group (Z) is bonded, and more specifically, may be a branched alkylene group having 3 to 30 carbon atoms represented by the following Chemical Formula 4: 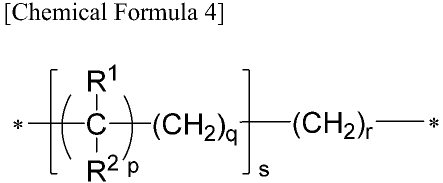 in Chemical Formula 4,
at least one of R¹ and R² is an alkyl group having 1 to 6 carbon atoms and the rest is hydrogen,
p is an integer of 1 to 3,
q and r are each independently an integer of 0 to 10, provided that q and r are not an integer of 0 at the same time, and
s is an integer of 1 to 3.

Meanwhile, in Chemical Formula 4, p, q, r, and s are appropriately determined within the above range such that the total number of carbon atoms included in L is 3 to 30.

More specifically, in Chemical Formula 4, at least one of R¹ and R² is an alkyl group having 1 or more carbon atoms and 6 or less carbon atoms, or 4 or less, or 3 or less, or 2 or less, and the rest may be hydrogen.

More specifically, in Chemical Formula 4, at least one of R¹ and R² is a methyl group, an ethyl group, an n-propyl group, or an isopropyl group, and the rest may be hydrogen. For example, both R¹ and R² may be a methyl group.

Also, in Chemical Formula 4, p may be an integer of 1 or 2.

Also, q and r may each independently be an integer of 0 to 6, or 0 to 3, but q and r are not an integer of 0 at the same time.

Also, s may be an integer of 1 or 2.

For example, in Chemical Formula 4, p may be an integer of 1 or 2, r may be an integer of 0, q may be an integer of 3 to 6, and s may be an integer of 1 or 2.

More specifically, in Chemical Formula 3, L may be 1,1-dimethylhexylene, 1,1-diethylhexylene, 1,1-dimethylheptylene, or 1,1-dimethylpentylene.

Also, in Chemical Formula 3, Z is a quaternary ammonium-based cationic functional group.

Usually, a wide range of functions may be exhibited depending on the type and number of cationic functional groups bonded to the pendant phenyl group. The Ion conductive polymer in the present invention includes a quaternary ammonium-based cationic functional group (Z) which is excellent in terms of ion conductivity and durability among various cationic functional groups. The number of bonds of the quaternary ammonium-based cationic functional group may be adjusted by controlling the stoichiometric ratio of raw materials used in the preparation.

Specifically, Z may be represented by the following Chemical Formula 5-1 or Chemical Formula 5-2: 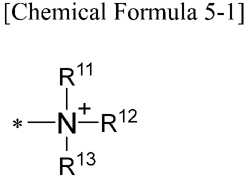 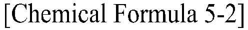 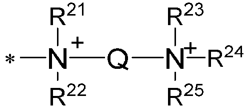 in Chemical Formulas 5-1 and 5-2,
Q is a substituted or unsubstituted alkylene group having 2 to 20 carbon atoms, and
R¹¹ to R¹³, and R²¹ to R²⁵ are each independently a substituted or unsubstituted alkyl group having 1 to 20 carbon atoms, a substituted or unsubstituted cycloalkyl group having 3 to 20 carbon atoms, a substituted or unsubstituted aryl group having 6 to 20 carbon atoms, a substituted or unsubstituted heterocyclic group having 2 to 20 carbon atoms including any one or more heteroatoms selected from the group consisting of N, O, and S, or adjacent two groups among R¹¹ to R¹³, R²¹ and R²², or adjacent two groups among R²³ to R²⁵ are connected to each other to form a substituted or unsubstituted N(nitrogen atom)-containing heterocyclic group having 2 to 20 carbon atoms.

More specifically, Q may be an alkylene group having 2 to 6 carbon atoms which is unsubstituted or substituted with one or more alkyl groups having 1 to 6 carbon atoms, and more specifically, may be ethylene, propylene, butylene, pentylene, or hexylene.

Also, R¹¹ to R¹³, and R²¹ to R²⁵ are each independently a substituted or unsubstituted alkyl group having 1 to 12 carbon atoms such as a methyl group, an ethyl group, a propyl group, a butyl group, a pentyl group, a hexyl group, a dimethylaminohexyl group, a dimethylaminopentyl group, a dimethylaminobutyl group, a dimethylaminopropyl group, or a dimethylaminoethyl group; a substituted or unsubstituted cycloalkyl group having 3 to 12 carbon atoms such as an adamantyl group; a substituted or unsubstituted aryl group having 6 to 12 carbon atoms such as a phenyl group, a benzyl group, or a dimethylphenyl group; or a substituted or unsubstituted heterocyclic group having 3 to 12 carbon atoms including one or more heteroatoms selected from the group consisting of N, O, and S such as a thiophenyl group, a furanyl group, a pyrrole group, an imidazolyl group, a pyridinyl group, a bipyridinyl group, a pyrimidyl group, a pyrrolidinyl group, a piperidinyl group, or an azepanyl group; or adjacent two groups among R¹¹ to R¹³, R²¹ and R²², or adjacent two groups among R²³ to R²⁵ are connected to each other to form a heterocyclic group having 3 to 8 carbon atoms such as a pyrrolidinyl group, a piperidinyl group, an imidazolyl group, an azepanyl group, or a 5-azoniaspiro[4,4]nonyl group (5-azoniaspiro[4,4]nonyl), and at this time, the heterocyclic group may be unsubstituted or substituted with one or more alkyl groups having 1 to 6 carbon atoms.

More specifically, in Chemical Formula 3, Z is trimethyl ammonium, triethyl ammonium, diethylmethylammonium, dimethylethylammonium, tripropyl ammonium, tributyl ammonium, N-methylpyrrolidinium, N-methyl piperidinium, or 6-(dimethylamino)-N,N,N-trimethylhexan-1-aminium (6-(Dimethylamino)-N,N,N-trimethylhexane-1-aminium); or may be selected from the group consisting of the following, each derived from 4,4'-trimethylenebis(1-methylpiperidine) (4,4'-Trimethylenebis(1-methylpiperidine)), N,N,N',N'-tetramethyl-1,6-hexanediamine (N,N,N',N'-Tetramethyl-1,6-hexanediamine), N,N,N',N'-tetramethyl-1,5-pentanediamine (N,N,N',N'-Tetramethyl-1,5-pentanediamine), N,N,N',N'-tetramethyl-1,4-butanediamine (N,N,N',N'-Tetramethyl-1,4-butanediamine), N,N,N',N'-tetramethyl-1,3-propanediamine (N,N,N',N'-Tetramethyl-1,3-propanediamine), and N,N,N',N'-tetramethyl-1,2-ethanediamine (N,N,N',N'-Tetramethyl-1,2-ethanediamine): 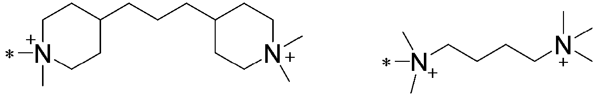 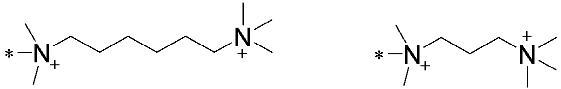 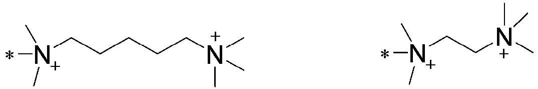 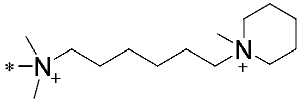 in the formula, * is a position bonded with L in Chemical Formula 3.

Also, in Chemical Formula 3, Y is an anionic group, and specifically may be a chloride ion, bromide ion, iodide ion, hydroxide ion (OH⁻), bicarbonate ion (HCO₃⁻), dihydrogen phosphate ion (H₂PO₄⁻), hydrogen phosphate ion (HPO₄²) or phosphate ion (PO₄³⁻).

More specifically, Chemical Formula 3 may be represented by the following Chemical Formula 3a.

[Chemical Formula 3a] *-L-(NR₃)⁺ · (Y')⁻

in Chemical Formula 3a, R is as defined above, and (Y')⁻ is the same as Y.

For example, when (Y')⁻ is OH⁻ in Chemical Formula 3a, Chemical Formula 3 may be any one of the following.

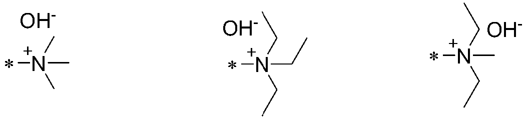

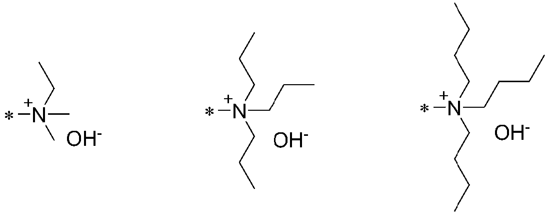

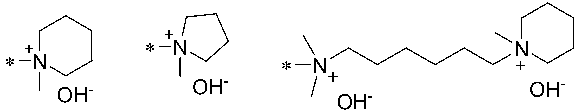

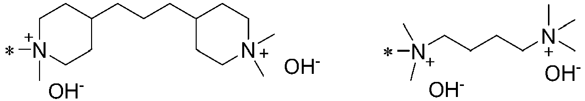

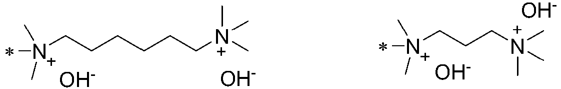

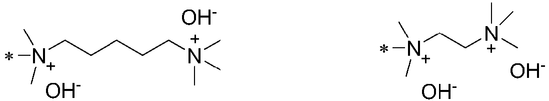

For example, in the Ion conductive polymer according to the present invention, the first repeat unit may be represented by the following Chemical Formula 1a-1 or 1a-2, but is not limited thereto: 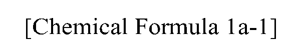 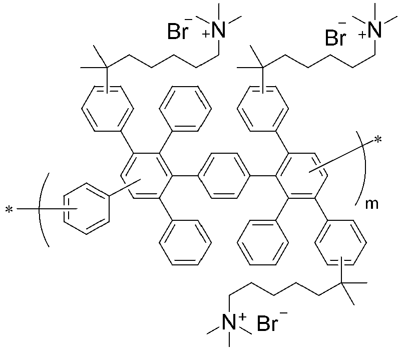 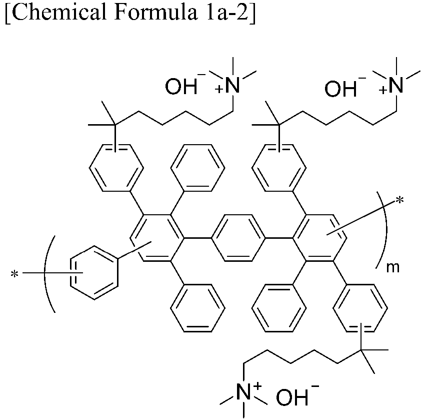 in Chemical Formulas 1a-1 and 1a-2, m is as defined above.

Also, in the Ion conductive polymer according to the present invention, for example, the second repeat unit may be represented by the following Chemical Formula 2a-1 or 2a-2, but is not limited thereto: 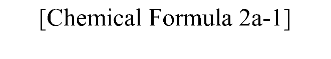 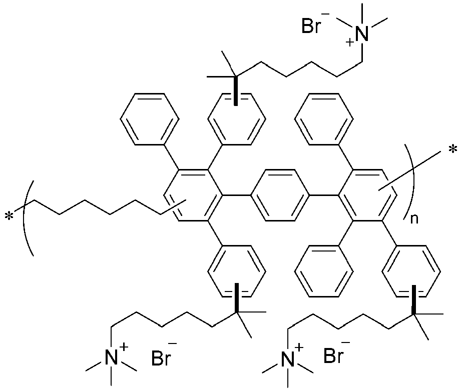 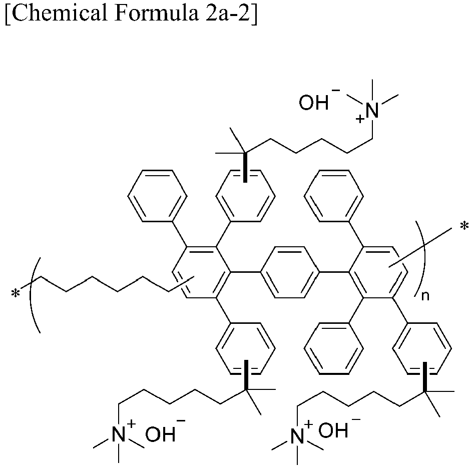 in Chemical Formulas 2a-1 and 2a-2, n is as defined above.

Meanwhile, in Chemical Formulas 1 and 2, m and n represent the molar ratio of the first and second repeating units, and are each independently an integer of 1 or more.

For example, in the Ion conductive polymer according to the present invention, m:n may be 9:1 to 1:9, and more specifically, 1:1 to 7:3. When it is included in the above ratio range, it is possible to implement a high molecular weight, and a more excellent effect may be exhibited in terms of changes in physical properties according to the change in the main chain structure.

Specifically, the Ion conductive polymer according to the present invention may be a copolymer represented by the following Chemical Formula 1-1, but is not limited thereto: 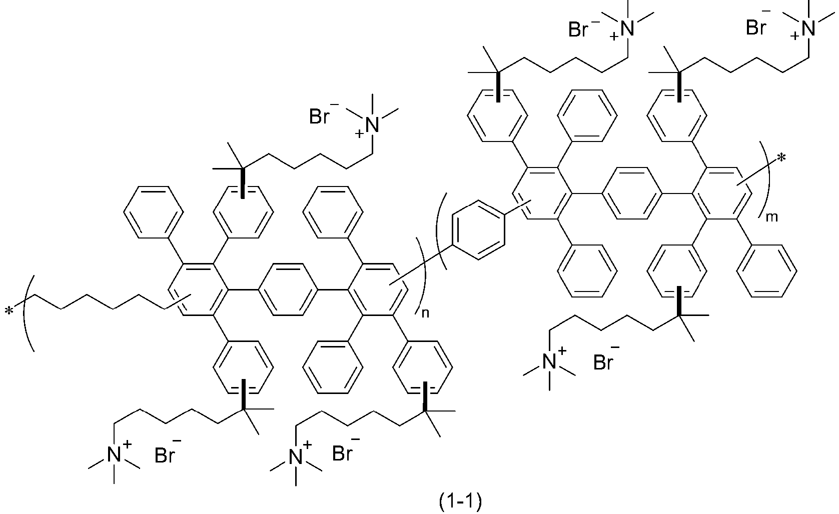 in Chemical Formula 1-1, m and n are as defined above.

Also, the Ion conductive polymer may have a weight average molecular weight (Mw) of 30 to 900 kDa, specifically 200 to 900 kDa, and more specifically 250 to 500 kDa.

In the present invention, the weight average molecular weight of the Ion conductive polymer may be measured using gel permeation chromatography, and specific measurement methods and conditions are as described in the Experimental Examples below.

Also, in the Ion conductive polymer, the ion exchange capacity (IEC) (meq./g) may be adjusted according to the degree of functionalization (DF).

IEC is a numerical value representing the ion transfer ability of a unit molecule. Theoretical values may be derived through the ratio of the number of functional groups to the polymer monomer weight. Experimental methods may be calculated using a titration method and an NMR analysis method.

In the case of the titration method, for a membrane doped in the form of a chloride counter-ion by immersion in a 1M NaCl aqueous solution for 24 hours, titration is performed using a titration equipment or according to the Mohr titration method, and the IEC may be calculated according to the following Equation 1 using the measured value of the result. $IEC \left(meq../g\right) = \left({ΔV}_{AgNO 3}\times {C}_{AgNO 3}\right) / {W}_{dry}$ in Equation 1,
V_{AgNO3} is the amount (mL) of 0.1M AgNO₃ aqueous solution added to the end point,
C_{AgNO3} is the concentration of the AgNO₃ aqueous solution, which is 0.1 mol/L, and
W_{dry} is the dry weight of the Ion conductive membrane before the titration test.

Meanwhile, measuring the IEC value through ¹H-NMR analysis may be performed according to methods known in Journal of polymer science, part B: Polymer Physics 2013, 51(24), 1736-1742 and Macromolecules 2009, 42(21), 8316-8321.

The IEC of the Ion conductive polymer according to the present invention is 1.00 meq./g or more, more specifically 2.10 meq./g or more, and may be 3.10 meq./g or less, or 2.60 meq./g or less. As described above, the Ion conductive polymer according to the present invention may adjust IEC in a wide range and has a relatively high IEC value compared to a conventional polyphenylene-based Ion conductive polymer having an equivalent level of Mw, and thus may exhibit more excellent ion conductivity.

Meanwhile, in the present invention, the IEC of the Ion conductive polymer was measured by ¹H NMR analysis, and the specific measurement method and conditions are as described in the Experimental Examples below.

The above Ion conductive polymer may be prepared, for example, by a preparation method comprising:
a first step of preparing a compound including a structure represented by the following Chemical Formula 8 (hereinafter referred to as a compound precursor') by Diels-Alder reaction of bistetracyclone with at least one of alkyne compound represented by the following Chemical Formula 6 and at least one of ethynyl substituted aromatic compound represented by the following Chemical Formula 7;
a second step of preparing a compound including a repeat unit represented by the following Chemical Formula 10 (hereinafter referred to as an 'intermediate') by reacting the compound precursor with at least one of compound represented by the following Chemical Formula 9 in the presence of a strong acid; and
a third step of reacting the intermediate with a raw material for forming a quaternary ammonium-based cationic functional group:

   [Chemical Formula 6] R^{a}C≡C-B-C≡CR^{b}
in Chemical Formula 6,
B is an arylene group having 6 to 18 carbon atoms, and
R^{a} and R^{b} are each independently hydrogen or an alkyl group having 1 to 30 carbon atoms,

   [Chemical Formula 7] R^{c}C≡C-D-C≡CR^{d}
D is an alkylene group having 2 to 9 carbon atoms, and
R^{c} and R^{d} are each independently hydrogen or an alkyl group having 1 to 30 carbon atoms, 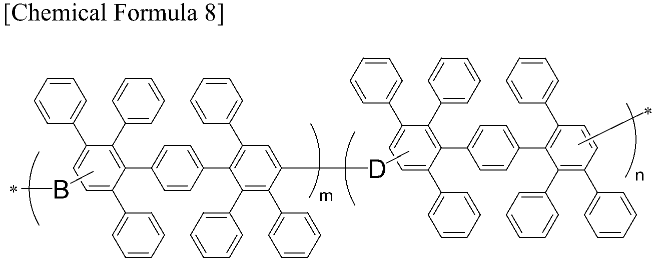
in Chemical Formula 8,
B and D are as defined above, and
m and n are each independently an integer of 1 or more,

   [Chemical Formula 9] HO-L-X
in Chemical Formula 9,
L is a branched alkylene group having 3 to 30 carbon atoms, and
X is a halogen group, 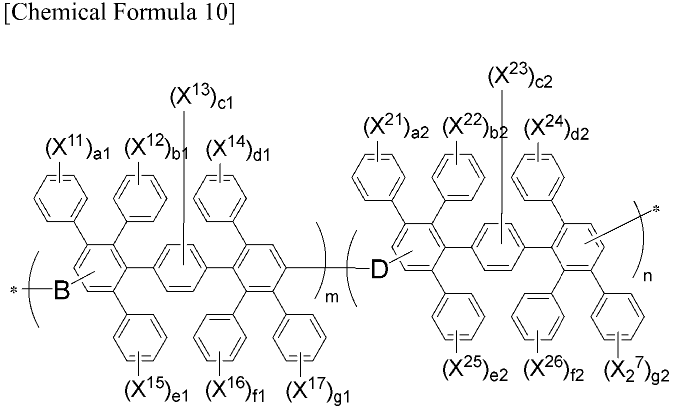
in Chemical Formula 10,
B, D, m and n are as defined above,
X¹¹ to X¹⁷ are each independently represented by the following Chemical Formula 11,
a1 to g1 are each independently an integer of 0 or 1, provided that at least one of a1 to g1 is an integer of 1, and
a2 to g2 are each independently an integer of 0 or 1, provided that at least one of a2 to g2 is an integer of 1,

   [Chemical Formula 11] _{*}-L-X
in Chemical Formula 11,
L and X are as defined above.
Hereinafter, each step will be described.

### (First step)

The first step is a step of preparing a compound precursor through a Diels-Alder reaction between bistetracyclone and a dienophile.

In the present invention, the compound precursor may be prepared according to the method described in literature Zinaida B. Shifrina, Marina S. Averina, Alexander L. Rusanov, Manfred Wagner, and Klaus Mullen, Branched Polyphenylenes by Repetitive Diels-Alder Cycloaddition, Macromolecules 2000 33 (10), 3525-3529, DOI: 10.1021/ma991369f, and J. K. Stille, F. W. Harris, R. O. Rakutis, H. Mukamal, Diels-Alder polymerizations: Polymers containing controlled aromatic segments, Journal of Polymer Science Part B: Polymer Letters, vol 4, 791-793 (1966). https://doi.org/10.1002/pol.1966.110041023, and the reaction temperature, reaction concentration, and reaction time are appropriately changed according to the physical properties of the compound precursor to be finally prepared, such as weight average molecular weight.

Specifically, in the present invention, the step of preparing the compound precursor may be performed by Diels-Alder reacting bistetracyclone as a diene with at least one of alkyne compound represented by Chemical Formula 6 and at least one of ethynyl substituted aromatic compound represented by Chemical Formula 7 as dienophiles. A compound comprising the repeat unit represented by Chemical Formula 8, for example, a poly(phenylene)-co-poly(phenylene alkylene) copolymer, is prepared by the above reaction.

Specific examples of the alkyne compound include 1,7-octadiyne or 1,9-decadiyne, and any one or two or more of these may be used.

Specific examples of the ethynyl substituted aromatic compound include 1,4-diethynylbenzene, 4,4'-diethynylbiphenyl, or 1,3-diethynylbenzene, and any one or two or more of these may be used in combination.

Also, the amount of the alkyne compound and the ethynyl substituted aromatic compound to be added may be determined according to the contents of the first and second repeating units in the Ion conductive polymer.

The bistetracyclone and dienophile may be obtained commercially or may be prepared directly. For example, in the case of bistetracyclone, it may be prepared by reacting 1,3-diphenyl-propanone with 1,4-bisbenzil.

Also, in the Diels-Alder reaction, bistetracyclone and the dienophile may be added in a molar ratio of 1.2:1 to 1:1.2, more specifically, in a molar ratio of 1:1. At this time, the dienophile is a mixture consisting of an alkyne compound and an ethynyl substituted aromatic compound.

Also, the Diels-Alder reaction may be performed under a nitrogen atmosphere.

Also, the Diels-Alder reaction may be performed at a temperature of 100 to 330°C, more specifically, 110 to 220°C.

Also, in the Diels-Alder reaction, as a solvent or a reaction medium, an ether-based compound such as diphenyl ether (Ph₂O); an aromatic hydrocarbon-based compound such as toluene (PhMe) or xylene (PhMe₂); or a mixture thereof may be used.

As a result of the Diels-Alder reaction, a compound precursor is produced in the reactants, and the produced compound precursor may be obtained in a solid state through a precipitation reaction.

The precipitation reaction may be performed according to a conventional precipitation method, and is not particularly limited. For example, in the present invention, after the Diels-Alder reaction is completed, the temperature of the reactants is lowered to 100 to 120°C, and a solvent such as toluene (PhMe) is added to dilute the reactants, and when the temperature of the diluted reactants is lowered to room temperature, the reactants are added dropwise to alcohols such as methanol; or common non-solvents such as hexane and acetone. As a result, the compound precursor produced in the reactants precipitates as a solid state.

Thereafter, the precipitated compound precursor may be obtained with high purity through common separation and purification processes such as drying, washing, and separation of foreign substances after separation.

### (Second step)

The second step is a step of preparing a compound comprising the repeat unit represented by Chemical Formula 10, that is, an intermediate, by reacting the compound precursor prepared in the first step with at least one of branched alcohol, specifically a compound represented by Chemical Formula 9, in the presence of a strong acid.

Specifically, the second step may be performed by dissolving the compound precursor prepared in the first step and at least one of compound represented by Chemical Formula 9 in a solvent under a nitrogen atmosphere, and then adding a strong acid for a substitution reaction.

Specific examples of the compound represented by Chemical Formula 9 include 7-bromo-2-methyl-2-heptanol, 7-bromo-2-ethyl-2-heptanol, or 5-bromo-2-methyl-2-pentanol, and any one or a mixture of two or more of these may be used.

Also, the amount of the compound represented by Chemical Formula 9 to be added may be appropriately selected in consideration of the degree of substitution of ion conductive groups in the pendant aryl group or backbone aryl group in the compound precursor. For example, the compound represented by Chemical Formula 9 may be added in a molar ratio of 1 to 10, more specifically, 3 to 7, relative to 1 mole of the compound precursor.

Also, dichloromethane or the like may be used as a solvent for dissolving the compound precursor and the compound represented by Chemical Formula 9.

Also, the dissolution process is performed at 0 to 30°C.

After dissolution is completed, a strong acid is added dropwise to the resulting solution and mixed.

The strong acid serves as a primary catalyst for initiating the reaction. Examples of the strong acid include trifluoromethanesulfonic acid (TFSA), or methanesulfonic acid, and any one or a mixture of two or more of these may be used. Or, Eaton's reagent (containing 7.7 wt% P₂O₅ in methanesulfonic acid) containing methanesulfonic acid may be used.

Also, the strong acid may be used in a molar ratio of 2 to 20, more specifically, 6 to 14, based on 1 mole of the compound precursor.

After mixing the strong acid, the temperature of the resulting reaction mixture is increased from 0°C to room temperature, and a stirring process may be further performed for 6 to 48 hours.

As a result of the above process, a compound comprising the repeat unit represented by Chemical Formula 10 is produced in the reactants, and the produced compound may be obtained in a solid state by adding the reactants dropwise to alcohols such as methanol; or common non-solvents such as hexane and acetone to perform a precipitation reaction.

Thereafter, common separation and purification processes such as washing using common non-solvents, separation, and drying may be further performed.

In addition, after the separation and purification process, the obtained product is redissolved in a solvent such as tetrahydrofuran (THF) or dichloromethane, and the resulting solution is added dropwise to alcohols such as methanol; or common non-solvents such as hexane and acetone to perform a precipitation reaction, whereby the intermediate may be obtained with high purity.

In the intermediate, which is the product of the second step reaction, the degree of introduction of the branched side-chain structural functional group of X¹¹ to X¹⁷, and X²¹ to X²⁷ may be adjusted according to the equivalent ratio and addition order of the reactants. In the present invention, the IEC, which is the final product, may be determined according to the degree of functionalization.

### (Third step)

The third step is a step of preparing an Ion conductive polymer comprising the first repeat unit represented by Chemical Formula 1 and the repeat unit represented by Chemical Formula 2 by reacting the intermediate prepared in the second step with a raw material for forming a quaternary ammonium-based cationic functional group.

Specifically, the third step may be performed by dissolving the intermediate in a polar aprotic solvent, and then adding a raw material for forming a quaternary ammonium-based cationic functional group for a nucleophilic substitution reaction.

The raw material for forming a quaternary ammonium-based cationic functional group is a nucleophile that provides a quaternary ammonium-based cationic functional group reaction, and during the reaction, a halogen group (X) in the intermediate is substituted with a cationic group of the nucleophile.

As the raw material for forming a quaternary ammonium-based cationic functional group, a tertiary amine-based compound, a quaternary ammonium salt, or a mixture thereof may be used.

Specific examples of the tertiary amine-based compound include trimethylamine (TMA), triethylamine, tripropylamine, tributylamine, N-methylpyrrolidine, N-methylpiperidine, 4,4'-trimethylenebis(1-methylpiperidine), N,N,N',N'-tetramethyl-1,6-hexanediamine, N,N,N',N'-tetramethyl-1,5-pentanediamine, N,N,N',N'-tetramethyl-1,4-butanediamine, N,N,N',N'-tetramethyl-1,3-propanediamine, or N,N,N',N'-tetramethyl-1,2-ethanediamine, and any one or a mixture of two or more of these may be used.

Also, specific examples of the quaternary ammonium salt include 6-(dimethylamino)-N,N,N-trimethylhexan-1-aminium salt, and the like.

The amount of the raw material for forming a quaternary ammonium-based cationic functional group to be added may be determined according to the degree of functionalization. For example, the raw material for forming a quaternary ammonium-based cationic functional group may be added in a molar ratio of 3 to 18, or 6 to 14, relative to 1 mole of the intermediate.

Meanwhile, when Y is a hydroxide ion in Chemical Formula 3, the counter-ion form may be changed by immersing the product after the third step reaction in a strong base aqueous solution such as sodium hydroxide or potassium hydroxide. In addition, when Y is a bicarbonate ion in Chemical Formula 3, the counter-ion form may be changed by immersing in a weak base aqueous solution such as sodium bicarbonate. Also, when Y is a chloride ion in Chemical Formula 3, the counter-ion form may be changed by immersing in an aqueous solution such as sodium chloride.

Meanwhile, in the nucleophilic substitution reaction, examples of the polar aprotic solvent include n-methyl pyrrolidone (NMP), dimethyl acetamide, dimethyl sulfoxide, or dimethyl formamide, and any one or a mixture of two or more of these may be used. The amount used is not particularly limited and may be appropriately selected in consideration of reaction efficiency and the like.

As a result of the reaction between the intermediate and the raw material for forming a quaternary ammonium-based cationic functional group, the Ion conductive polymer according to the present invention is produced in the reactants. The produced Ion conductive polymer may be obtained in a solid state by adding the reactants dropwise to ethers such as dimethyl ether and tetrahydrofuran; or common non-solvents such as hexane and acetone to perform a precipitation reaction.

Thereafter, the Ion conductive polymer may be obtained with high purity and high yield through common separation and purification processes such as washing, separation, and drying.

The Ion conductive polymer prepared through the above preparation method comprises an aromatic segment (Aromatic segment) formed through Diels-Alder polymerization as in Chemical Formula 1, and a structure in which three phenyl rings and an alkylene chain are alternately bonded as in Chemical Formula 2, and further has a structure in which a quaternary ammonium-based cationic functional group is bonded to a pendant phenyl group by a branched linker with respect to these main chain structures, so that ion channels for ion transfer may be easily formed, and as a result, excellent ion conductivity may be exhibited. In addition, it may exhibit improved dimensional stability while maintaining excellent solubility. In addition, the Ion conductive polymer has excellent solubility relative to its relatively high molecular weight, and thus may exhibit improved film-forming processability. As a result, the Ion conductive polymer may be used as various ion exchange materials such as an Ion conductive single membrane, an Ion conductive reinforced membrane, an Ion conductive composite membrane, an Ion conductive reinforced composite membrane, an Ion conductive crosslinked membrane, an electrolyte membrane, a separator, a water treatment membrane, or an ionomer for a membrane-electrode assembly (MEA), and is particularly useful for an Ion conductive membrane. Specifically, the Ion conductive polymer may be used as an ion exchange material for a system using electrochemistry, such as a water electrolysis system, a fuel cell, a redox flow battery, a carbon dioxide reduction system, an electrochemical ammonia production and decomposition system, an electrodialysis (ED) system, a reverse electrodialysis (RED) system, or a capacitive deionization (CDI) system.

Thus, according to another embodiment of the invention, there is provided an Ion conductive membrane comprising the Ion conductive polymer.

The Ion conductive membrane may be prepared by a conventional Ion conductive membrane preparation method except for using the above Ion conductive polymer.

For example, a resin composition further comprising at least one of various additives such as a main solvent, a co-solvent, an antioxidant, a heat stabilizer, a lubricant, a tackifier, a plasticizer, a crosslinking agent, a defoamer, and a dispersant along with the above Ion conductive polymer and as necessary, may be prepared, and it may be prepared as a molded body in a form such as a fiber or a film by an arbitrary method such as extrusion and spinning, rolling, or casting.

More specifically, the Ion conductive polymer and optionally one or more additives are dissolved in a solvent such as N-methylpyrrolidone, dimethylformamide, dimethyl sulfoxide, or dimethylacetamide to prepare a resin composition, the prepared composition is applied to a plate such as a glass plate or a support for film production and dried to obtain a film having a thickness of several to several hundreds of µm, specifically 10 to 120 µm, more specifically 50 to 90 µm, and then the film may be prepared by detaching it from the plate or the support for film production.

Since the Ion conductive membrane comprises the above Ion conductive polymer, it may exhibit excellent ion conductivity along with low WU and swelling ratio.

Specifically, the Ion conductive membrane has an ion exchange capacity (IEC) of 1.00 meq./g or more, more specifically 2.00 meq./g or more, or 2.10 to 3.00 meq./g, as measured after doping in the form of a chloride counter-ion by immersion in a 1M NaCl aqueous solution for 24 hours.

The ion exchange capacity of the Ion conductive membrane may be measured by the Mohr titration method, and the measurement method and conditions are as described in the Experimental Examples below.

In addition, after the Ion conductive membrane is doped in the form of a hydroxide counter ion by immersion in a 1M KOH aqueous solution for 24 hours, the resistance value at 60°C is measured using a 4-probe electrode, and the ion conductivity (IC)(σ) calculated according to the following Equation 2 using the value is 70 mS/cm or more, more specifically 70 to 120 mS/cm, or 75 to 100 mS/cm. $Ion Conductivity \left(σ, mS/cm\right) = L / \left(R\times W\times T\right)$ In Equation 2,
L is the distance (cm) between Pt probes inside the measurement cell,
R is the resistance value (Ω) of the measured membrane,
W is the width (cm) of the membrane doped with hydroxide ions, and
T is the thickness (cm) of the membrane doped with hydroxide ions.

Also, the Ion conductive membrane has an ion conductivity measured at 70°C of 80 mS/cm or more, more specifically 80 to 130 mS/cm, or 90 to 110 mS/cm.

Also, the Ion conductive membrane has an ion conductivity measured at 80°C of 90 mS/cm or more, more specifically 100 to 150 mS/cm, or 100 to 120 mS/cm.

In addition, the Ion conductive membrane is doped in the form of a hydroxide counter ion by immersion in a 1M KOH aqueous solution for 24 hours, dried at 80°C for 15 hours, and the WU (Water Uptake) calculated according to the following Equation 3 is 70 wt% or more, more specifically 70 to 150 wt%. $WU \left(wt%\right) = \left({W}_{wet}-{W}_{dry}\right) \times 100 / {W}_{dry}$

(In Equation 3,
W_{wet} is the weight (g) of the Ion conductive membrane measured after doping in the form of a hydroxide counter ion by immersion in a 1M KOH aqueous solution for 24 hours, and
W_{dry} is the weight (g) of the Ion conductive membrane measured after drying the Ion conductive membrane for which W_{wet} was measured in a vacuum oven at 80°C for 15 hours)

Also, the Ion conductive membrane is doped in the form of a hydroxide counter ion by immersion in a 1M KOH aqueous solution for 24 hours, dried at 80°C for 15 hours, and the swelling ratio calculated according to the following Equation 4 is 10% or more, more specifically 10 to 30%. $Swelling Ratio \left(%\right) = \left({L}_{wet}-{L}_{dry}\right) \times 100 / {L}_{dry}$

(In Equation 4,
L_{wet} is the length (mm) of the Ion conductive membrane measured after doping in the form of a hydroxide counter ion by immersion in a 1M KOH aqueous solution for 24 hours, and
L_{dry} is the length (mm) of the Ion conductive membrane measured at room temperature after drying the Ion conductive membrane for which L_{wet} was measured in a vacuum oven at 60°C to 80°C for 15 hours)

Hereinafter, preferred embodiments are presented to help the understanding of the present invention, but the following examples are merely illustrative of the present invention, and it is obvious to those skilled in the art that various changes and modifications are possible within the scope and technical idea of the present invention, and it is natural that such changes and modifications belong to the attached claims.

Meanwhile, unless otherwise specified in the present specification, room temperature (ordinary temperature) usually means a laboratory temperature of 20 to 25°C, and atmospheric pressure usually means a laboratory pressure of 0.95 to 1.05 atm.

NMR analysis of the compounds prepared in Synthesis Examples and Examples was analyzed using a Bruker AVANCE III HD 600MHz device (manufactured by Bruker) under conditions of room temperature and spin 20 Hz.

In addition, the molecular weight of the compounds prepared in Synthesis Examples is a weight average molecular weight (g/mol), and was measured through gel permeation chromatography analysis. Specifically, it was measured using an Agilent 1260/Malvern TDA305 device (manufactured by Agilent) under the conditions of Column: PLgel 500Å+100Å+50Å (manufactured by Agilent) and Standard: Polystyrene polystyrene standard of various Mw by molecular weight.

Sample preparation conditions (solvent): use of THF solvent and use after passing through 0.1 µm PTFE filter, sample concentration 2.0 mg/ml
Column conditions: Column GMHxl,
solvent THF,
sample injection volume 200 µl,
flow rate 1.0 ml/min
Analysis temperature: room temperature
Refractive index analysis

### <Preparation of compound precursor>

The compound precursors used in Examples and Comparative Examples were prepared according to the method described in literature Zinaida B. Shifrina, Marina S. Averina, Alexander L. Rusanov, Manfred Wagner, and Klaus Mullen, Branched Polyphenylenes by Repetitive Diels-Alder Cycloaddition, Macromolecules 2000 33 (10), 3525-3529, DOI: 10.1021/ma991369f and J. K. Stille, F. W. Harris, R. O. Rakutis, H. Mukamal, Diels-Alder polymerizations: Polymers containing controlled aromatic segments, Journal of Polymer Science Part B: Polymer Letters, vol 4, 791-793 (1966). https://doi.org/10.1002/pol.1966.110041023, and the reaction temperature, reaction concentration, and reaction time were appropriately changed according to the molecular weight of the compound precursor to be finally prepared.

For example, the Bistetracyclone used in Example 1 below was prepared as in Synthesis Example 1 below.

### Synthesis Example 1: Bistetracyclone synthesis

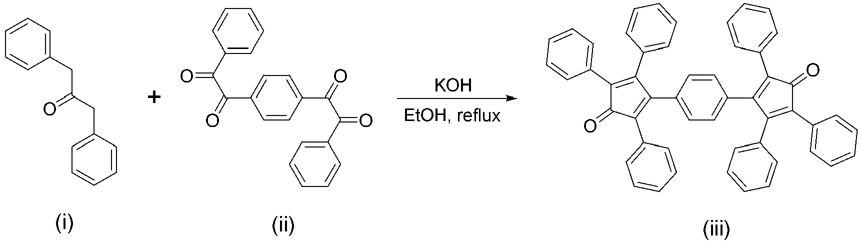

1,4-bisbenzil (ii) (20.0 g, 58.421 mmol), 1,3-diphenyl-propanone (i) (25.8 g, 122.684 mmol), and anhydrous EtOH (540 mL) were added to a 1000 mL round bottom flask, and stirred for 30 minutes under reflux conditions while maintaining an argon atmosphere. After confirming that the opaque yellow reaction mixture turned to a transparent fluorescent yellow, a solution prepared by adding KOH (6.6 g, 116.842 mmol, 2.0 eq.) and anhydrous EtOH (60 mL) to a 100 mL round flask in advance and stirring at room temperature was added to the reaction mixture, and stirred for 5 hours under reflux conditions. After the temperature of the resulting reaction product was lowered to room temperature, it was filtered to obtain a precipitate. The precipitate was washed with EtOH and dried to obtain bistetracyclone (iii) in a black solid phase. In addition, the solvent of the filtrate separated as a result of the filtration was also evaporated, then dissolved while heating in dichloromethane (DCM), and recrystallized. The obtained bistetracyclone (iii) had its purity confirmed through ¹H-NMR (total yield: 26.3 g, purity: 98%).

¹H-NMR (CDCl_{3,} 600MHz): δ 6.773 (s, 4H), 6.91 (d, J= 7.8Hz, 4H), 7.17-7.28 (m, 26H)

### Example 1

### Step 1: synthesis of poly(phenylene) as compound precursor

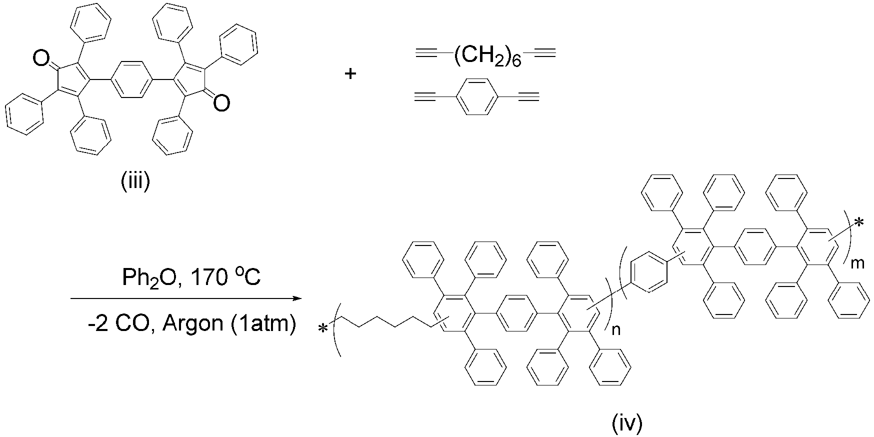

Bistetracyclone (iii) (13.5 g, 19.541 mmol) prepared in Synthesis Example 1, 1,9-decadiyne (1.3 g, 9.771 mmol), 1,4-diethynylbenzene (1.2 g, 9.771 mmol), and Ph₂O (60.8 mL) were added to a 500 mL round bottom flask, purged under a nitrogen stream for 1 hour, and then stirred at 220°C for 24 hours while maintaining a constant temperature.

After finishing the heating, when the temperature of the reactants dropped to 100°C, toluene (90 mL) was added to dilute the reactants. When the temperature of the diluted reactants was lowered to room temperature, the reactants were added to hexane (2000 mL) in a dropwise manner while stirring. After 2-3 hours, stirring was stopped, and the solid produced as a result of the reaction was separated and dried. After dissolving the dried solid in THF (100 mL), it was added to acetone (2000 mL) in a dropwise manner while stirring. The solid part was separated and dried under reduced pressure to obtain poly(phenylene) (iv) as a yellowish-white solid state as a compound precursor (yield: 13.8 g, purity: 99% excluding residual solvent).

¹H-NMR (CDCl₃, 600MHz): δ 1.03 (br s, 4H), 1.36 (br s, 4H), 2.33 (br s, 4H), 6.11-6.40 (m, 8H), 6.45-6.75 (m, 12H), 6.76-7.00 (m, 30H), 7.03-7.21 (m, 22H), 7.23-7.30 (m, 2H), 7.43 (br s, 2H)

### Step 2: Brominated Poly(phenylene) synthesis

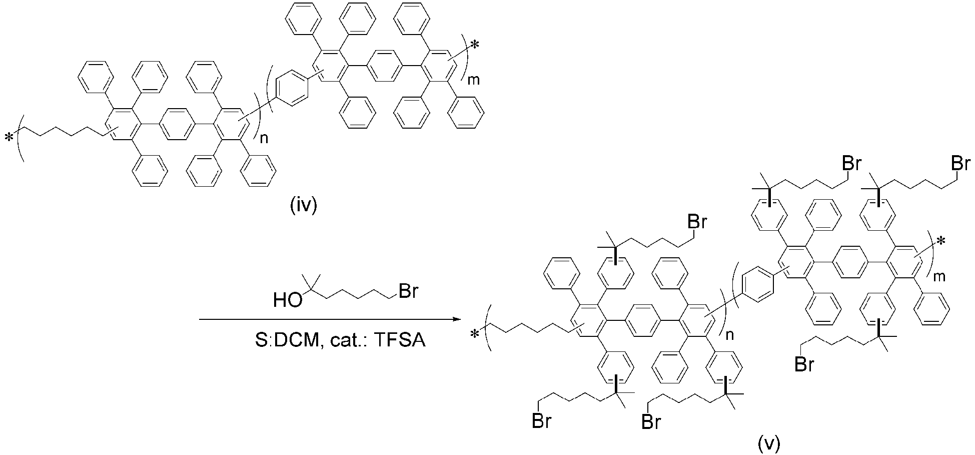

The compound precursor, poly(phenylene) (iv) (3.0 g, 3.922 mmol) prepared in Step 1, and 7-bromo-2-methyl-2-heptanol (BMH) (4.1 g, 19.608 mmol) as a branched alcohol were added to a 100 mL round bottom flask, dichloromethane (42 mL) was added to dissolve poly(phenylene) under a nitrogen atmosphere, and then the mixture was stirred at 0°C. Trifluoromethane sulfonic acid (TFSA, 3.46 mL, 39.215 mmol) was added to the resulting mixed solution in a dropwise manner. The resulting reaction mixture was gradually heated from 0°C to room temperature and then stirred for 24 hours. The resulting reactants were added to MeOH (1000 mL) in a dropwise manner and then stirred for 3 hours. After completing the stirring, the supernatant was discarded and the reaction product was obtained. The obtained reaction product was washed several times with MeOH as a non-solvent. After the solid content of the washed reaction product was separated and dried, THF (150 mL) was added and dissolved. The resulting solution was added to MeOH (500 mL) in a dropwise manner and then stirred for 3 hours. After completing the stirring, the solid content was separated and dried under reduced pressure to obtain compound (v) of brominated poly(phenylene) (yield: 4.7 g).

¹H-NMR (CD₂Cl₂, 600MHz): δ 0.35-2.10 (m, 17H), 2.20-2.53 (m, 0.5H), 2.95-3.55 (m, 2H), 5.90-7.60 (m, aromatic)

### Step 3: Aminated Poly(phenylene) synthesis

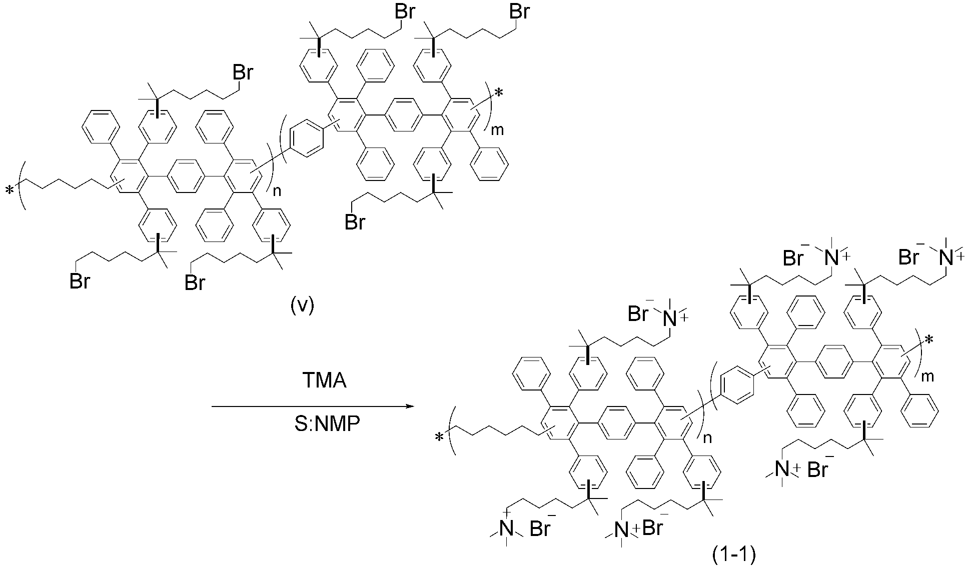

Brominated poly(phenylene)(v) (4.7 g, 3.611 mmol) prepared in Step 2 was added to a 100 mL round bottom flask and dissolved in NMP (37.8 mL). Trimethylamine (TMA, 4.2 M solution in EtOH, 10.32 mL) was added to the resulting solution and stirred for 48 hours. The resulting reaction product was added to ethyl ether (500 mL) in a dropwise manner and stirred for 3 hours. After completing the stirring, the supernatant was discarded from the resulting reaction product, acetone (500 mL) was added as a non-solvent to the remaining reaction product, and the mixture was washed with stirring. The washed solid was separated and dried to obtain aminated poly(phenylene) (1-1) (yield: 4.9 g).

¹H-NMR (DMSO-d₆, 600MHz): δ 0.30-1.80 (m, 15H), 2.78-3.15 (br s, 9H), 3.16-3.35 (m, 3H), 5.94-7.60 (m, aromatic)

### Examples 2 to 4

Compound (1-1) was prepared in the same manner as in Example 1 except that compound (iv) having various molecular weights was used as a compound precursor for preparing aminated poly(phenylene) as described in Table 1 below, and it was performed under the described conditions.

**[Table 1]**

| | | Step 1 | | | | | Step 2 | |
|---|---|---|---|---|---|---|---|---|
| | Mw of compou nd (iv) (kDa) | Input amount of compou nd (iv) (mmol) | Input amount of BMH (mmol) | Input amount of TFSA (mmol) | Reaction time (h) | Mw of compou nd (v) (kDa) | Input amount of compound (v) | Input amount of Trimethyl amine (in EtOH, M) |
| Example 1 | 73 | 3.922 | 19.608 | 39.215 | 24 | 460 | 3.61 | 4.2 |
| Example 2 | 59 | 3.922 | 15.686 | 31.372 | 18 | 298 | 3.45 | 4.2 |
| Example 3 | 48 | 3.922 | 15.686 | 31.372 | 18 | 422 | 3.65 | 4.2 |
| Example 4 | 38 | 3.922 | 15.686 | 23.529 | 3 | 313 | 3.57 | 4.2 |

### Comparative Example 1

A polyphenylene Ion conductive polymer (b) was prepared under the conditions described in Table 2 below.

### Step 1: synthesis of poly(phenylene) as compound precursor

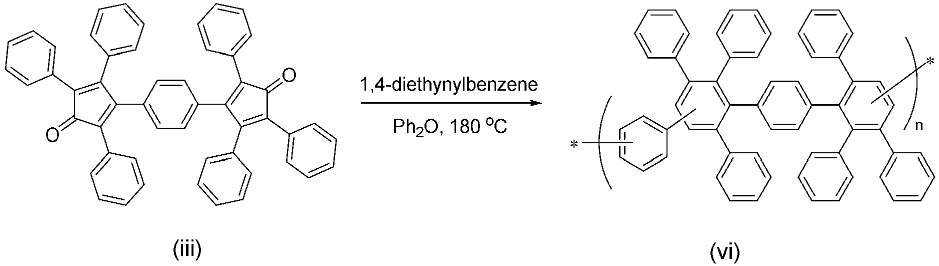

Bistetracyclone (iii) (27.0 g, 39.083 mmol) prepared in Synthesis Example 1, 1,4-diethynylbenzene (4.931 g, 39.083 mmol), and Ph₂O (216 mL) were added to a 500 mL round bottom flask, purged under a nitrogen stream for 1 hour, and then stirred at 180°C for 24 hours while maintaining a constant temperature.

After finishing the heating, when the temperature of the reactants dropped to 100°C, toluene (260 mL) was added to dilute the reactants. When the temperature of the diluted reactants was lowered to room temperature, the reactants were added to hexane (2500 mL) in a dropwise manner while stirring. After 2-3 hours, stirring was stopped, and the solid produced as a result of the reaction was separated and dried. After dissolving the dried solid in THF (430 mL), it was added to acetone (2500 mL) in a dropwise manner while stirring. The solid part was separated and dried under reduced pressure to obtain poly(phenylene) (vi) as a yellowish-white solid state as a compound precursor (yield: 29.98 g, purity: 99% excluding residual solvent).

### Step 2: Poly(phenylene)-KBr synthesis

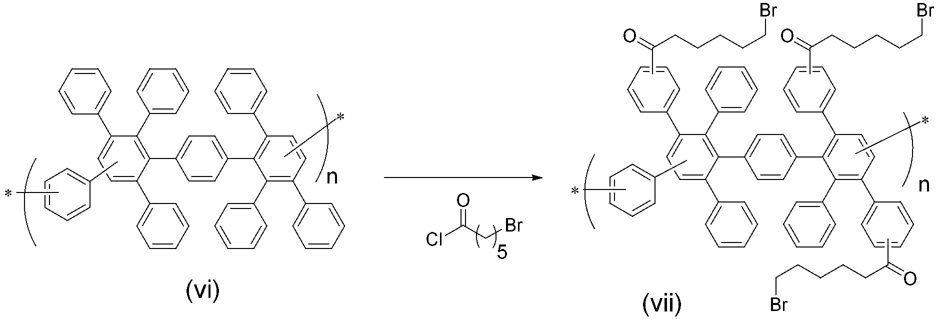

The compound precursor (vi) (10.0 g, 13.14 mmol) prepared in Step 1 and 6-Bromohexanoyl chloride (8.43 g, 39.48 mmol) were added to a 250 mL round bottom flask, dichloromethane (500 mL) was further added to dissolve poly(phenylene) under a nitrogen atmosphere, and then the mixture was stirred at 0°C. AlCl₃ (5.26 g, 39.48 mmol, 3.0 eq) was added to the resulting mixed solution, the resulting reaction mixture was gradually heated from 0°C to room temperature and then stirred for 6 hours. The resulting reaction mixture was poured into 1 L of DI water, and a solid was precipitated while evaporating DCM at 40°C.

The precipitated solid was separated from DI water and dried, and the dried solid was dissolved in DCM (200 mL), then added to 1 L of acetone in a dropwise manner and stirred. The resulting precipitated solid part was separated and dried under reduced pressure to obtain intermediate compound (vii) (12.86 g, 76%) as a yellow solid.

### Step 3: Brominated Poly(phenylene) synthesis

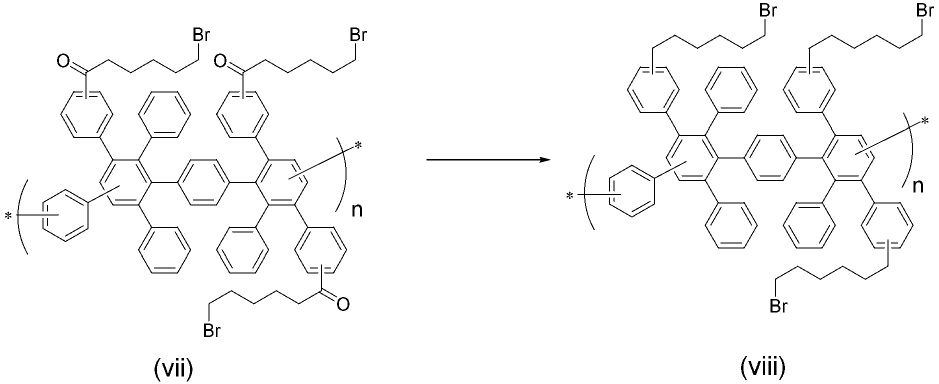

To the intermediate compound (vii) (10 g, 7.74 mmol), Et₃SiH (4.14 g, 35.6 mmol), TFA (120 mL), and 1,2-DCE (500 mL) were added, and a reduction reaction was performed by refluxing for 24 hours. After the reaction was completed and the temperature of the reaction mixture became room temperature, the reaction mixture was poured into MeOH (1 L), then the precipitated solid was filtered and dried. The dried solid was dissolved in DCM (100 ml), then added to acetone (1 L) in a dropwise manner while stirring. After washing for 3 hours, the stirring was stopped and the solid part was separated and dried. As a result, brominated poly(phenylene) (viii) (5.59 g) was obtained.

### Step 4: Aminated Poly(phenylene) synthesis

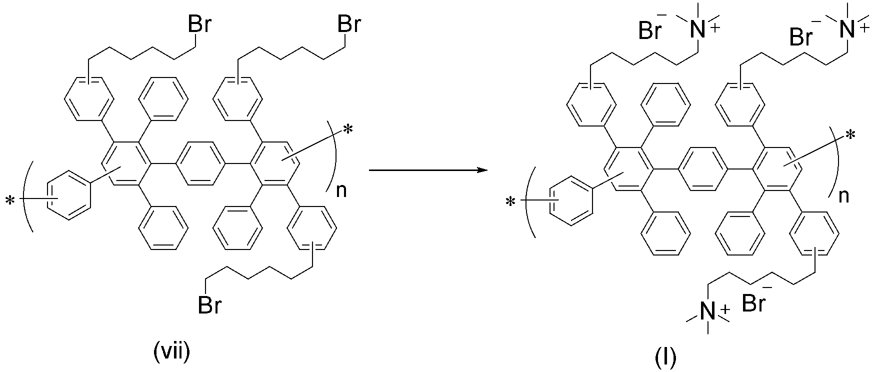

Brominated poly(phenylene)(viii) (10 g, 7.38 mmol) prepared in Step 3 was added to a 250 mL round bottom flask and dissolved in NMP (87 mL, 10 wt%). Trimethylamine (TMA, 4.2 M solution in EtOH, 21.09 mL) was added to the resulting solution and stirred for 48 hours. The resulting reaction product was added to ethyl ether (1000 mL) in a dropwise manner and stirred for 3 hours. After completing the stirring, the supernatant was discarded from the resulting reaction product, acetone (1000 mL) was added as a non-solvent to the remaining reaction product, and the mixture was washed with stirring. The washed solid was separated and dried to obtain aminated poly(phenylene) (I) (yield: 11 g).

### Comparative Example 2

An Ion conductive polymer was prepared in the same manner as in Comparative Example 1, except for changing to the conditions described in Table 2 below.

However, the Ion conductive polymer prepared in Comparative Example 2 was not dissolved in a solvent. Accordingly, the molecular weight was measured using a part of the polymer dissolved in a solvent, and processing into a membrane was impossible, so membrane property evaluation was not performed.

**[Table 2]**

| | Step 1 | | | | Step 2 | | | | Step 3 | |
|---|---|---|---|---|---|---|---|---|---|---|
| | Mw of compo und (iv) (kDa) | Input amount of compo und (iv) (mmol) | Input amount of 6-Bromo Hexan oyl Chlori de (mmol) | Input amount of AlCl₃ (mmol) | Input amount of compo und (vii) (mmol) | Input amount of Et₃SiH (mmol) | Input amount of TFA (mL) | Mw of compo und (viii) (kDa) | Input amount of compou nd (viii) | Input amount of Trimeth ylamine (in EtOH, M) |
| Compara tive Example 1 | 83 | 13.14 | 39.48 | 39.48 | 7.74 | 35.6 | 120 | 172 | 7.38 | 4.2 |
| Compara tive Example 2 | 120 | 13.14 | 39.48 | 39.48 | 7.74 | 35.6 | 120 | 250 | 7.38 | 4.2 |

### Experimental Example

### (1) Weight average molecular weight (Mw)

For the Ion conductive polymers prepared in Examples and Comparative Examples, weight average molecular weights were measured through gel permeation chromatography (GPC) analysis. Mw (g/mol) was derived from the analysis result based on a calibration curve formed using a polystyrene standard. However, since ionic polymers (Ionic Polymer) cannot be measured by GPC, GPC was measured for the precursor polymer before the quaternization reaction.

### <GPC analysis conditions>

Instrument used: Agilent
Column: Agilent PL Mixed D, Agilent PLgel 100Å, Agilent PLgel 50Å
Sample concentration: 1 wt/vol% in tetrahydrofuran (THF)
Carrier: THF
Detection method: RI
Flow rate: 1.0 ml/min
Column temperature: 25°C
Detector: Agilent RI detector

When preparing the calibration curve, a polystyrene standard with a molecular weight of 104 to 24,600 g/mol was used.

### (2) AEM evaluation

### (2-1) AEM sample preparation

### Step 1: membrane preparation

2.0 g of the Ion conductive polymer prepared in Examples or Comparative Examples was added to a 70 ml vial and sufficiently dissolved with a solvent dimethylsulfoxide (DMSO, 35 g). The resulting polymer solution was filtered with a cotton wool filter to remove foreign substances included in the polymer solution. After spread casting the polymer solution from which foreign substances were removed on a 18 cm x 18 cm glass plate, it was dried in an oven at 70°C for 24 hours. After the drying was completed, the glass plate was collected and a membrane was obtained.

### Step 2: pretreatment

In the membrane prepared in Step 1, the counter ion of the quaternary ammonium functional group is I⁻ or Br⁻. The counter ion of this membrane may be changed according to the purpose, and this process is called doping. Depending on the doping solution, an AEM including anionic counter ions such as Cl⁻, HCO₃⁻, OH⁻, etc. may be prepared. Also, a PEM including phosphate anion forms such as H₂PO₄⁻ may be prepared.

### A. Chloride Doping (for IEC measurement)

The membrane prepared in Step 1 was placed in a 1M NaCl aqueous solution at room temperature and ion exchange was performed for 24 hours. After the ion exchange was completed, the membrane was taken out and sufficiently washed with distilled water several times. In order to reliably remove residual NaCl, the washed membrane was stored in distilled water for 24 hours and then dried before use.

### B. Hydroxide Doping (for IC and WU measurement, for MEA manufacturing)

In an environment where CO₂ is completely blocked, such as inside a glove box in an argon atmosphere, the membrane prepared in Step 1 was placed in a 1M KOH aqueous solution and ion exchange was performed for 24 hours. After completing the ion exchange, the membrane was taken out and sufficiently washed several times with distilled, deionized, Ar-gas bubbled water. In order to reliably remove residual KOH, the washed membrane was washed several times with distilled water, then immersed in distilled water and stored for 24 hours before use. A membrane ion-exchanged in a hydroxide ion form should not be contacted with CO₂ because it forms a bicarbonate ion within minutes when in contact with CO₂ in the air.

### (2-2) Thickness

The thickness of the ion-exchanged membrane prepared in Step 2 of the (2-1) AEM sample preparation was measured using a thickness gauge (ID C0512NXBS, manufactured by Mitutoyo). The values described in Table 2 below are average values obtained by measuring 20 parts.

### (2-3) Ion Exchange Capacity (IEC)

For the membrane doped with a chloride counter-ion, the IEC value was measured through ¹H-NMR analysis according to the method known in Journal of polymer science, part B: Polymer Physics 2013, 51(24), 1736-1742 and Macromolecules 2009, 42(21), 8316-8321:

### <¹H-NMR analysis conditions>

Instrument used: 600 MHz Bruker NMR
acquisition time 2.73s
delay time 1s
number of scans 128
pulse 30°
solvent CDCl₃
Sample concentration: 2.5 wt%

### (2-4) Ion Conductivity (IC)

For the membrane doped with hydroxide ions, ion conductivity (in-plane ion conductivity, IC) was measured using a 4-probe electrode (BekkTech Membrane Conductivity Test System). In a fuel cell system, the resistance value according to the change of relative humidity (RH) value at a specific temperature is checked to measure IC. In a water electrolysis system, the difference is that the resistance value is measured by completely immersing the measurement cell in DI water so that the RH becomes 100% at a specific temperature.

Since it is measured using a sample doped with hydroxide ions, all pretreatment processes were performed in a CO₂-free atmosphere such as a glove box. Even in the process of measuring IC, Ar gas was continuously purged into the container containing the measurement cell so that the membrane was not exposed to CO₂. A specimen (applying actual measurement values for each sample) of 4 cm in width and 0.7 cm in length was mounted in a measurement cell (4-probe electrode cell) in a glove box, and quickly moved to a container containing water for conductivity measurement using an Ar bag.

After sealing the container, it was connected to an IC measurement facility (BekkTech Membrane Conductivity Test System) in an Ar gas purge state. The resistance value at 60°C was measured, and the result was used to calculate IC according to the following Equation 2 (BekkTech Conductivity Testing Software). $Ion Conductivity \left(σ, mS/cm\right) = L / \left(R\times W\times T\right)$ in Equation 2,
L is the distance (cm) between Pt probes inside the measurement cell, which is 4.2 mm in this Experimental Example,
R is the resistance value (Ω) of the measured membrane,
W is the width (cm) of the membrane doped with hydroxide ions, and
T is the thickness (cm) of the membrane doped with hydroxide ions.

Also, the resistance values at 70°C and 80°C were measured respectively, and IC(σ) was calculated according to Equation 2 above.

### (2-5) WU (water uptake) and swelling ratio

WU measures the ratio of moisture absorbed per unit mass. Since the weight change of an AEM sample doped with hydroxide ions is measured, the experiment was performed in a glove box under an argon atmosphere to avoid contact with CO₂ as much as possible.

For the membrane doped in the form of a hydroxide counter ion by immersion in a 1M KOH aqueous solution for 24 hours, the moisture on the surface of the membrane was wiped off as if lightly sweeping it using KimWipe, and the weight of the wet-state membrane (W_{wet}) (g) was measured.

The membrane for which the measurement was completed was dried in a vacuum oven at 80°C for 15 hours, and the weight of the dry-state membrane (W_{dry}) (g) was measured. Using the measured values, WU was calculated according to Equation 3 below. $WU \left(wt%\right) = \left({W}_{wet}-{W}_{dry}\right) \times 100 / {W}_{dry}$

The swelling ratio represents the physical dimensional change rate of the membrane due to moisture absorption. The swelling ratio may also be measured using a sample for measuring water uptake.

Specifically, for the membrane doped in the form of a hydroxide counter ion by immersion in a 1M KOH aqueous solution for 24 hours, the moisture on the surface of the membrane was wiped off as if lightly sweeping it using KimWipe, and the length of the wet-state membrane (L_{wet}) was measured accurately in mm.

After the membrane for which the measurement was completed was washed 5 times with pure water, it was dried in a vacuum oven at 80°C for 15 hours, and the length of the dry-state membrane (L_{dry})was measured accurately to the mm unit. After comparing with the size measured immediately after completing the doping, the swelling ratio was calculated according to Equation 4 below. $Swelling Ratio \left(%\right) \left(%\right) = \left[\left({L}_{wet}-{L}_{dry}\right)\times 100\right] / {L}_{dry}$

The measurement results are shown in Table 3 below.

**[Table 3]**

| No. | Mw (kDa) | Thick ness (µm) | IEC (meq./g) | | OH⁻ counter ion form | | | | |
|---|---|---|---|---|---|---|---|---|---|
| | | | Cal. | Exp.^{a} (¹H-NMR) | WU (wt%) | Swelli ng ratio (%) | σ (mS/ cm) @60 °C | σ (mS/ cm) @70 °C | σ (mS/ cm) @80 °C |
| Exampl e 1 | 460 | 75 | 2.12 | 2.17 | 70 | 12 | 78 | 91 | 111 |
| Exampl e 2 | 298 | 55 | 2.46 | 2.55 | 109 | 21 | 84 | 100 | 113 |
| Exampl e 3 | 422 | 68 | 2.44 | 2.51 | 107 | 21 | 91 | 103 | 108 |
| Exampl e 4 | 313 | 84 | 2.60 | 2.64 | 111 | 27 | 96 | 100 | 100 |
| Compar ative Exampl e 1 | 172 | 70 | 1.72 | 2.17 | 70 | 13 | 59 | 71 | 87 |
| Compar ative Exampl e 2 | 250 | NA | NA | NA | NA | NA | NA | NA | NA |

In Table 3, a is a measured value measured through ¹H-NMR analysis.

In addition, NA means unmeasurable.

As a result of the experiment, the Ion conductive polymers of the Examples were easier to control in molecular weight and ion exchange capacity (IEC) compared to the polymers of the Comparative Examples, and exhibited excellent ion conductivity, WU, and swelling properties at an equivalent level or higher.

## Claims

1. An Ion conductive polymer comprising
a first repeat unit represented by the following Chemical Formula 1, and
a second repeat unit represented by the following Chemical Formula 2: 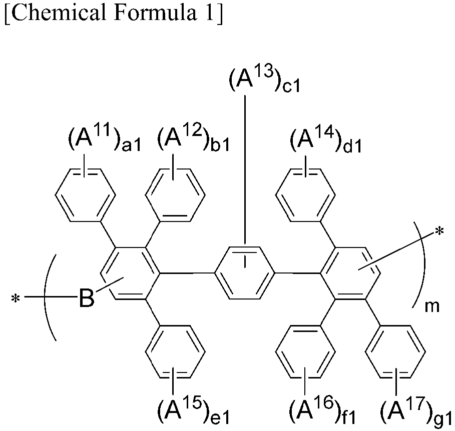
in Chemical Formula 1,
A¹¹ to A¹⁷ are each independently represented by the following Chemical Formula 3,
B is an arylene group having 6 to 18 carbon atoms,
a1 to g1 are each independently an integer of 0 or 1, provided that at least one of a1 to g1 is an integer of 1, and
m is an integer of 1 or more, 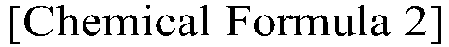 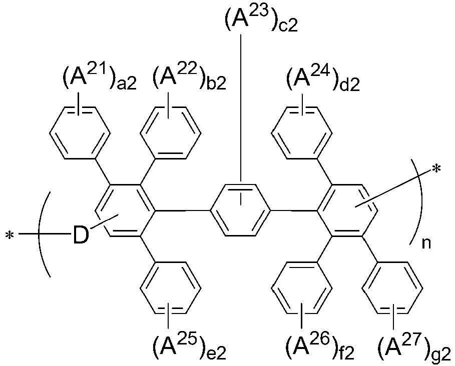
in Chemical Formula 2,
A²¹ to A²⁷ are each independently represented by the following Chemical Formula 3,
D is an alkylene group having 2 to 9 carbon atoms,
a2 to g2 are each independently an integer of 0 or 1, provided that at least one of a2 to g2 is an integer of 1, and
n is an integer of 1 or more,
[Chemical Formula 3] *-L-Z · Y
in Chemical Formula 3,
L is a branched alkylene group having 3 to 30 carbon atoms,
Z is a quaternary ammonium-based cationic functional group, and
Y is an anion.

2. The Ion conductive polymer of claim 1, wherein the B is p-phenylene, m-phenylene, or biphenylene.

3. The Ion conductive polymer of claim 1, wherein the D is butylene or hexylene.

4. The Ion conductive polymer of claim 1, wherein the L is a branched alkylene group having 3 to 30 carbon atoms represented by the following Chemical Formula 4: 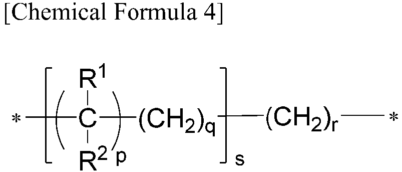 in Chemical Formula 4,
at least one of R¹ and R² is an alkyl group having 1 to 6 carbon atoms and the rest is hydrogen,
p is an integer of 1 to 3,
q and r are each independently an integer of 0 to 10, provided that q and r are not an integer of 0 at the same time, and
s is an integer of 1 to 3.

5. The Ion conductive polymer of claim 1, wherein the L is 1,1-dimethylhexylene, 1,1-diethylhexylene, 1,1-dimethylheptylene, or 1,1-dimethylpentylene.

6. The Ion conductive polymer of claim 1, wherein the Z is represented by the following Chemical Formula 5-1 or Chemical Formula 5-2: 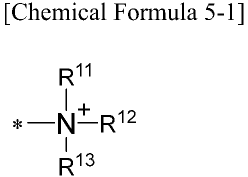 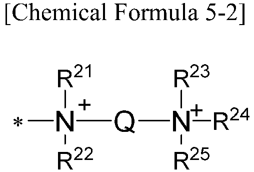 in Chemical Formulas 5-1 and 5-2,
Q is a substituted or unsubstituted alkylene group having 2 to 20 carbon atoms, and
R¹¹ to R¹³, and R²¹ to R²⁵ are each independently a substituted or unsubstituted alkyl group having 1 to 20 carbon atoms, a substituted or unsubstituted cycloalkyl group having 3 to 20 carbon atoms, a substituted or unsubstituted aryl group having 6 to 20 carbon atoms, or a substituted or unsubstituted heterocyclic group having 2 to 20 carbon atoms including any one or more heteroatoms selected from the group consisting of N, O, and S, or adjacent two groups among R¹¹ to R¹³, R²¹ and R²², or adjacent two groups among R²³ to R²⁵ are connected to each other to form a substituted or unsubstituted N-containing heterocyclic group having 2 to 20 carbon atoms.

7. The Ion conductive polymer of claim 1, wherein the Y is a chloride ion, bromide ion, iodide ion, hydroxide ion, bicarbonate ion, dihydrogen phosphate ion, hydrogen phosphate ion, or phosphate ion.

8. The Ion conductive polymer of claim 1, wherein the Z is trimethyl ammonium, triethyl ammonium, diethylmethylammonium, dimethylethylammonium, tripropyl ammonium, tributyl ammonium, N-methylpyrrolidinium, N-methyl piperidinium, or 6-(dimethylamino)-N,N,N-trimethylhexan-1-aminium; or is selected from the group consisting of the following: 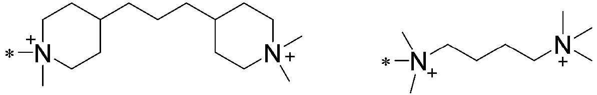 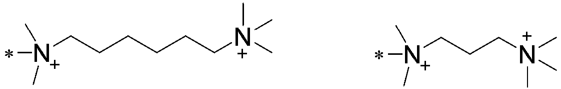 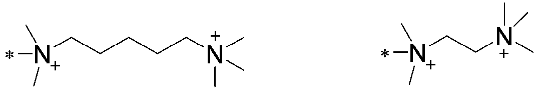 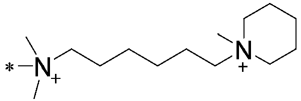 in the formula, * means a bonded position with L in Chemical Formula 3.

9. The Ion conductive polymer of claim 1, wherein the first repeat unit is represented by the following Chemical Formula 1a-1 or 1a-2: 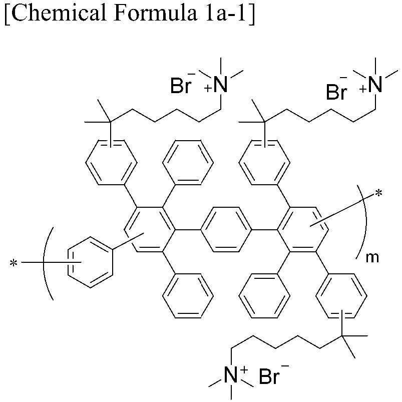 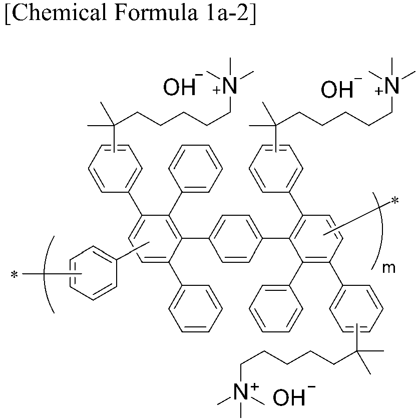 in Chemical Formulas 1a-1 and 1a-2, m is as defined in claim 1.

10. The Ion conductive polymer of claim 1, wherein the second repeat unit is represented by the following Chemical Formula 2a-1 or 2a-2: 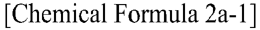 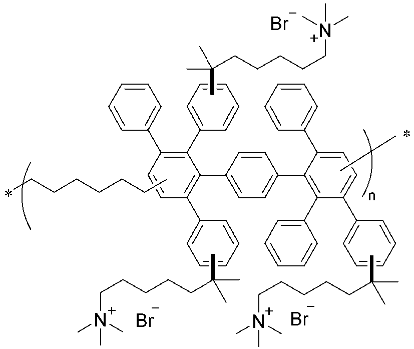 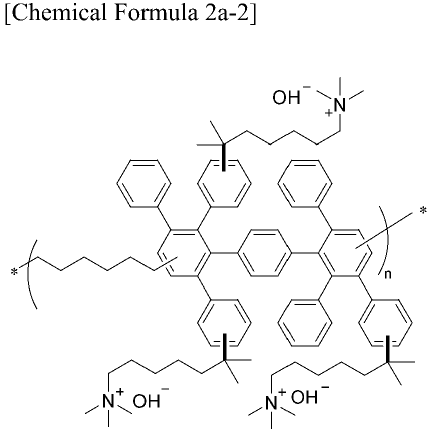 in Chemical Formulas 2a-1 and 2a-2, n is as defined in claim 1.

11. The Ion conductive polymer of claim 1, which is a compound represented by the following Chemical Formula 1-1. 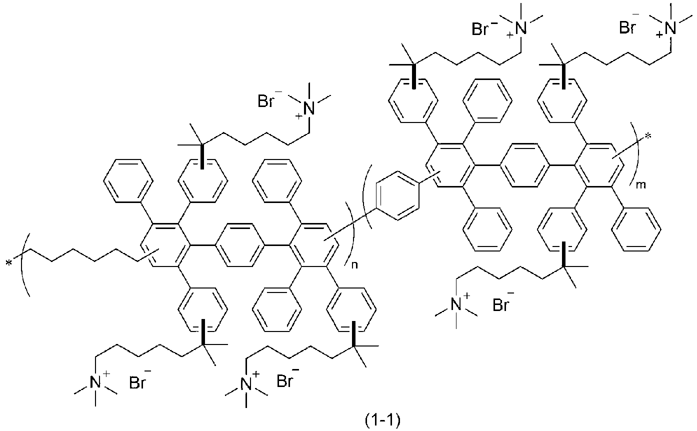 In Chemical Formula 1-1, m and n are as defined in claim 1.

12. The Ion conductive polymer of claim 1, wherein the Ion conductive polymer has a weight average molecular weight of 30 to 900 kDa.

13. The Ion conductive polymer of claim 1, wherein the Ion conductive polymer has an ion exchange capacity of 1.00 meq./g or more.

14. A method for preparing the Ion conductive polymer according to claim 1, the method comprising:
a first step of preparing a compound comprising a structure represented by the following Chemical Formula 8 by Diels-Alder reaction of bistetracyclone with at least one of alkyne compound represented by the following Chemical Formula 6 and at least one of ethynyl substituted aromatic compound represented by the following Chemical Formula 7;
a second step of preparing a compound comprising a repeat unit represented by the following Chemical Formula 10 by reacting the compound comprising the structure represented by Chemical Formula 8 with at least one of compound represented by the following Chemical Formula 9 in the presence of a strong acid; and
a third step of reacting the compound comprising the repeat unit represented by Chemical Formula 10 with a raw material for forming a quaternary ammonium-based cationic functional group:
[Chemical Formula 6] R^{a}C≡C-B-C≡CR^{b}
in Chemical Formula 6,
B is an arylene group having 6 to 18 carbon atoms, and
R^{a} and R^{b} are each independently hydrogen or an alkyl group having 1 to 30 carbon atoms,
[Chemical Formula 7] R^{c}C≡C-D-C≡CR^{d}
D is an alkylene group having 2 to 9 carbon atoms, and
R^{c} and R^{d} are each independently hydrogen or an alkyl group having 1 to 30 carbon atoms, 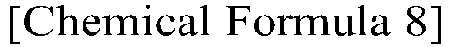 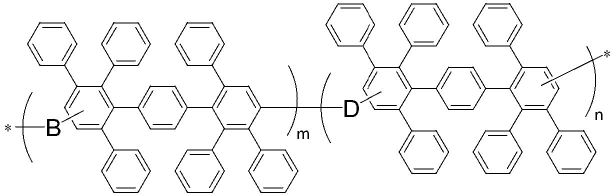
in Chemical Formula 8,
B and D are as defined above, and
m and n are each independently an integer of 1 or more,
[Chemical Formula 9] HO-L-X
in Chemical Formula 9,
L is a branched alkylene group having 3 to 30 carbon atoms, and
X is a halogen group, 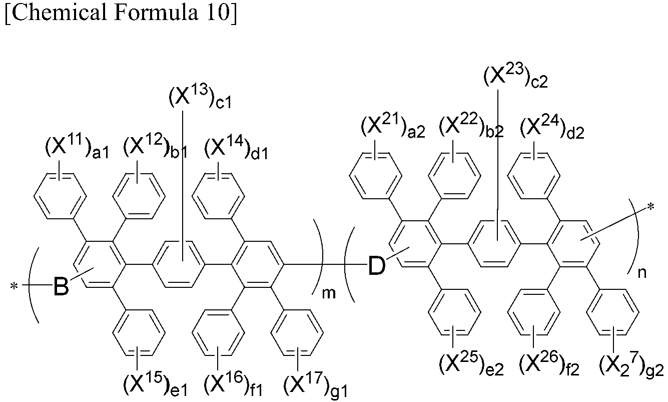
in Chemical Formula 10,
B, D, m, and n are as defined above,
X¹¹ to X¹⁷, and X²¹ to X²⁷ are each independently represented by the following Chemical Formula 11,
a1 to g1 are each independently an integer of 0 or 1, provided that at least one of a1 to g1 is an integer of 1, and
a2 to g2 are each independently an integer of 0 or 1, provided that at least one of a2 to g2 is an integer of 1,
[Chemical Formula 11] *-L-X
in Chemical Formula 11, L and X are as defined above.

15. The method of claim 14, wherein the alkyne compound is 1,7-octadiyne or 1,9-decadiyne.

16. The method of claim 14, wherein the ethynyl substituted aromatic compound is 1,4-diethynylbenzene, 4,4'-diethynylbiphenyl, or 1,3-diethynylbenzene.

17. The method of claim 14, wherein the second step is performed by dissolving the compound comprising the structure represented by Chemical Formula 8 and at least one of compound represented by Chemical Formula 9 in a solvent under a nitrogen atmosphere and then adding a strong acid for a substitution reaction.

18. The method of claim 14, wherein the compound represented by Chemical Formula 9 is 7-bromo-2-methyl-2-heptanol, 7-bromo-2-ethyl-2-heptanol, or 5-bromo-2-methyl-2-pentanol.

19. The method of claim 14, wherein the compound represented by Chemical Formula 9 is added in a molar ratio of 1 to 10 relative to 1 mole of the compound comprising the structure represented by Chemical Formula 8.

20. The method of claim 14, wherein the strong acid comprises trifluoromethanesulfonic acid, methanesulfonic acid, or a mixture thereof.

21. The method of claim 14, wherein the strong acid is added in a molar ratio of 2 to 20 based on 1 mole of the compound comprising the structure represented by Chemical Formula 8.

22. The method of claim 14, wherein the third step is performed by dissolving the compound comprising the structure represented by Chemical Formula 10 in a polar aprotic solvent and then adding a raw material for forming a quaternary ammonium-based cationic functional group to undergo a nucleophilic substitution reaction.

23. The method of claim 14, wherein the raw material for forming a quaternary ammonium-based cationic functional group comprises a tertiary amine-based compound, a quaternary ammonium salt, or a mixture thereof.

24. The method of claim 23, wherein the tertiary amine-based compound is trimethylamine, triethylamine, tripropylamine, tributylamine, N-methylpyrrolidine, N-methylpiperidine, 4,4'-trimethylenebis(1-methylpiperidine), N,N,N',N'-tetramethyl-1,6-hexanediamine, N,N,N',N'-tetramethyl-1,5-pentanediamine, N,N,N',N'-tetramethyl-1,4-butanediamine, N,N,N',N'-tetramethyl-1,3-propanediamine, or N,N,N',N'-tetramethyl-1,2-ethanediamine.

25. The method of claim 23, wherein the quaternary ammonium salt is 6-(dimethylamino)-N,N,N-trimethylhexan-1-aminium salt.

26. The method of claim 14, wherein the raw material for forming a quaternary ammonium-based cationic functional group is added in a molar ratio of 3 to 18 relative to 1 mole of the compound comprising the structure represented by Chemical Formula 10.

27. An ion exchange material comprising the Ion conductive polymer according to claim 1.

28. The ion exchange material of claim 27, wherein the ion exchange material is an Ion conductive single membrane, an Ion conductive reinforced membrane, an Ion conductive composite membrane, an Ion conductive reinforced composite membrane, an Ion conductive crosslinked membrane, an electrolyte membrane, a separator, a water treatment membrane, or an ionomer for a membrane-electrode assembly.

29. The ion exchange material of claim 27, wherein the ion exchange material is for a water electrolysis system, a fuel cell, a redox flow battery, a carbon dioxide reduction system, an electrochemical ammonia production and decomposition system, an electrodialysis system, a reverse electrodialysis system, or a capacitive deionization system.

30. An Ion conductive membrane comprising the Ion conductive polymer according to claim 1.

31. The Ion conductive membrane of claim 30, wherein the Ion conductive membrane has an ion exchange capacity of 1.0 meq./g or more as measured after doping in the form of a chloride counter-ion by immersion in a 1M NaCl aqueous solution for 24 hours.

32. The Ion conductive membrane of claim 30, wherein the Ion conductive membrane has an ion conductivity measured at 60°C of 70 mS/cm or more after doping in the form of a hydroxide counter ion by immersion in a 1M KOH aqueous solution for 24 hours.

33. The Ion conductive membrane of claim 30, wherein the Ion conductive membrane has a WU of 70 wt% or more as calculated according to the following Equation 3 after doping in the form of a hydroxide counter ion by immersion in a 1M KOH aqueous solution for 24 hours and then drying at 80°C for 15 hours: $WU \left(wt%\right) = \left({W}_{wet}-{W}_{dry}\right) \times 100 / {W}_{dry}$ in Equation 3,
W_{wet} is the weight of the Ion conductive membrane measured after doping in the form of a hydroxide counter ion by immersion in a 1M KOH aqueous solution for 24 hours, and
W_{dry} is the weight of the Ion conductive membrane measured after drying the Ion conductive membrane for which W_{wet} was measured in a vacuum oven at 80°C for 15 hours.

34. The Ion conductive membrane of claim 30, wherein the Ion conductive membrane has a swelling ratio of 10% or more as calculated according to the following Equation 4 after doping in the form of a hydroxide counter ion by immersion in a 1M KOH aqueous solution for 24 hours and then drying at 80°C for 15 hours: $swelling ratio \left(%\right) = \left({L}_{wet}-{L}_{dry}\right) \times 100 / {L}_{dry}$ in Equation 4,
L_{wet} is the length of the Ion conductive membrane measured after doping in the form of a hydroxide counter ion by immersion in a 1M KOH aqueous solution for 24 hours, and
L_{dry} is the length of the Ion conductive membrane measured at room temperature after drying the Ion conductive membrane for which L_{wet} was measured in a vacuum oven at 60°C to 80°C for 15 hours.
